# EUROPEAN PATENT SPECIFICATION

(11) **EP 4 534 614 B1**
(45) Date of publication and mention of the grant of the patent: **15.04.2026**
(21) Application number: 23201299.7
(22) Date of filing: 02.10.2023
(51) Int. Cl.: C09D 11/101, C07F 9/53, C08F 2/50, C07F 9/32, C08F 2/48

(54) **PHOTOINITIATOR PACKAGE COMPRISING SPECIALISED BISACYLPHOSPHINE OXIDE PHOTOINITIATORS, FURTHER ACYLPHOSPHINE OXIDE PHOTOINITIATORS AND OPTICAL BRIGHTENER SENSITIZERS**
PHOTOINITIATOR-VERPACKUNG ENTHALTEND SPEZIELLE BISACYLPHOSPHINOXID-PHOTOINITIATOREN, WEITERE ACYLPHOSPHINOXID-PHOTOINITIATOREN UND AUFHELLERSENSIBILISATOREN
ENSEMBLE PHOTO-INITIATEUR COMPRENANT DES PHOTO-INITIATEURS D'OXYDE DE BISACYLPHOSPHINE SPÉCIAUX, D'AUTRES PHOTO-INITIATEURS D'OXYDE D'ACYLPHOSPHINE ET SENSIBILISATEURS D'AZURANTS OPTIQUES

(43) Date of publication of application: 09.04.2025
(73) Proprietor: IGM Group B.V., 5145 RM Waalwijk (NL)
(72) Inventor: MORONE, Marika, 22030 Lipomo (CO) (IT); CREMONA, Emilio, 21040 Venegono Superiore (VA) (IT); PASQUALI, Ilaria, 20017 Rho (MI) (IT); CASATI, Marco, 20027 Rescaldina (MI) (IT)
(74) Representative: Maiwald GmbH

(56) References cited:
- US-A1- 2015 353 751
- US-A1- 2016 039 851

## Description

### Field of the Invention

The present invention relates to a photoinitiator package comprising one or more bisacylphosphine oxide photoinitiators, one or more further acylphosphine oxide photoinitiators, one or more optical brightener sensitizers, and optionally one or more amines, wherein the photoinitiator package is a blend that is liquid at 25 °C and standard pressure, a photopolymerizable composition comprising the photoinitiator package and suitable polymerizable compounds, a method for polymerizing the photopolymerizable composition and a use of the photoinitiator package in photopolymerization applications.

### Background to the Invention

Photoinitiators for promoting the radical polymerisation of ethylenically unsaturated compounds may be classed as either Norrish Type-I, wherein an electronically excited photoinitiator fractures to form a free radical that acts to initiate the radical polymerisation, or Norrish Type-II, wherein an electronically excited photoinitiator abstracts a hydrogen radical from a further molecule to form a free radical from said further molecule, said free radical acting to initiate the radical polymerisation. Whilst Type-II photoinitiators require the presence of certain additives/co-initiators, these additives/co-initiators are not generally required for Type-I photoinitiators.

The development of new Type-I photoinitiators is a key area of research in the field of resin curing. In addition to the provision of novel Type-I photoinitiators, the provision of Type-I photoinitiator packages, wherein the activity of the Type-I photoinitiator is enhanced by the presence of other compounds, such as photosensitizers. These compounds absorb light at a different wavelength to that of the photoinitiator itself and transfer energy to the photoinitiator, improving the energy absorption by the photoinitiator.

Phosphine oxides are a well-known family of Type-I photoinitiators that provide excellent activity due to the highly reactive phosphinoyl radical formed upon fragmentation. Whist excellent photoinitiators in deep-cure systems, they are notoriously much less effective at achieving surface curing. As such, blends of phosphine oxide photoinitiators with other photoinitiators known to be more effective at surface curing are often used to ensure a thorough cure.

How well different Type-I photoinitiators interact with sensitizers is difficult to predict and often depends on the structure and energy levels of the photoinitiator. The provision of highly active photoinitiator packages is desirous as improved photopolymerization may be achieved without the need to develop new photoinitiators. In particular, an improvement of the surface curing abilities of phosphine oxide photoinitiators would allow these powerful photoinitiators to be more broadly appliec

Relevant prior art documents represent US 2016/039851 A1 and US 2015/353751 A1.

### Summary of the Invention

The present observation is based on the observation that combinations of sensitizers and photoinitiator blends that comprise certain bisacylphosphine oxide photoinitiators have unexpectedly excellent photoinitiator properties, including surface curing ability.

The present invention, in a first aspect, is thus directed to a photoinitiator package comprising, more preferably consisting of:
a) one or more bisacylphosphine oxide photoinitiators, each having a structure according to formula (I): 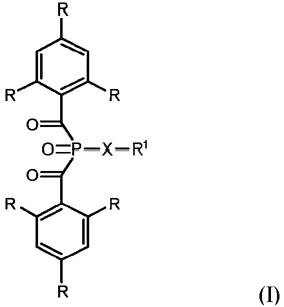
   wherein each instance of R is independently selected from the group consisting of C₁-C₄ alkyl;
   wherein X is selected from the group consisting of direct single bond, O, S, NR³, -CH₂CO₂-, and -CH₂CH₂CO₂-;
   wherein R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
   wherein R² is 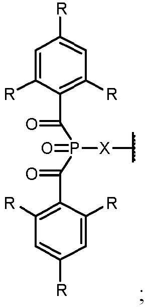
   wherein R³ is selected from the group consisting of hydrogen, (CO)R⁴, phenyl, C₁-C₁₂ alkyl, C₂-C₁₂ alkyl being interrupted by one or more O, wherein said C₁-C₁₂ alkyl or interrupted C₂-C₁₂ alkyl is unsubstituted or substituted by one or more C₃-C₇ cycloalkyl, OH or by NCO, C₃-C₁₂ cycloalkyl which is unsubstituted or substituted by one or more C₁-C₄ alkyl, C₁-C₄ alkoxy, OH or by NCO;
   wherein R⁴ is selected from the group consisting of C₁-C₁₂ alkyl or C₂-C₁₂ alkyl which is interrupted by one or more O, wherein said C₁-C₁₂ alkyl or interrupted C₂-C₁₂ alkyl is unsubstituted or substituted by one or more C₃-C₇-cycloalkyl, OH, NCO or by phenyl which is substituted by NCO; C₃-C₁₂ cycloalkyl; C₂-C₁₀ alkenyl which is unsubstituted or substituted by one or more C₁-C₄ alkyl, OH or C₁-C₄ alkoxy; C₆-C₁₄ aryl which is unsubstituted or substituted by C₁-C₁₂ alkyl, C₁-C₁₂ alkoxy, NCO or by NCO-substituted C₁-C₁₂ alkyl.
b) one or more further acylphosphine oxide photoinitiators having a structure not according to formula (I), and
c) one or more optical brightener sensitizers, and
d) optionally, one or more amines,
   wherein the photoinitiator package is a blend that is liquid at 25 °C and standard pressure.

In a second aspect, the present invention is directed to a photopolymerizable composition, comprising:
a) one or more ethylenically unsaturated, free-radical polymerizable compounds;
b) the photoinitiator package according to the first aspect.

In a third aspect, the present invention is directed to a method for photocuring photopolymerizable compositions, coatings, adhesives and inks, said method comprising the following steps in the given order:
a) coating or printing the photopolymerizable composition according to the second aspect onto a substrate, and
b) photopolymerizing said coated or printed composition with a light source on said substrate.

In a final aspect, the present invention is directed to a use of the photoinitiator package according to the first aspect in the production of printing inks, screen-printing inks, gravure printing inks, solder masks, etch offset-printing inks, flexographic- printing inks, gravure printing inks, inkjet inks, resist material, insulators, encapsulants, image-recording material, solder mask, passivation layer, protective coating, 3D-printing objects and molds, holographic applications, optical fiber coating, waveguide and lens, overprint varnish, wood, vinyl, metal and plastic coatings.

### Definitions

In the present description the expressions "alkyl" or "alkyl group" mean, where not differently indicated, a linear or branched, saturated alkyl chain containing the given number of carbon atoms and includes all possibilities for each number of carbon atoms in the alkyl group, i.e. for three carbon atoms: n-propyl and i-propyl; for four carbon atoms: n-butyl, i-butyl, s-butyl and t-butyl etc..

The expressions "aryl" or "aryl group" include, for example, a substituted or unsubstituted aryl group, such as a substituted or unsubstituted phenyl group, a substituted or unsubstituted naphthyl group, an anthracenyl group, an indenyl group, a fluorenyl group.

The expressions "heteroaryl" or "heteroaryl group" include, for example, a substituted or unsubstituted heteroatom-containing aromatic ring system, such as pyridine, pyrrole, furan, triazine, indole, quinolone, thiophene etc.

The expression "C₁-C₄₀ alkyl which is interrupted by one or more oxygens" means that, in case more than one oxygen atom is present, said oxygen atoms are separated from one another by at least one methylene group, i.e. the oxygen atoms are non-consecutive. Examples include the following: -OCH₂OCH₃, -OCH₂CH₂OCH₂CH₃, -O[CH₂CH₂O]ᵥCH₃, -O[CH₂CH₂O]ᵥOH, -O[CH₂CH₂O]ᵥCH₂CH₃, -CH₂O[CH₂CH₂O]ᵥCH₃ with v=1-19, -O[CH₂CH₂CH₂O]ₚOH, -O[CH₂CH₂CH₂O]ₚCH₃, -O[CH₂CH₂CH₂O]ₚCH₂CH₃,-CH₂O[CH₂CH₂CH₂O]ₚCH₃ with p=1-12.

When a group is substituted, the term "substituted" means that said group bears one or more substituents, said substituents being preferably selected from halogen atom, alkyl, cycloalkyl, alkoxy, alkylamino, dialkylamino, alkylthio or arylthio group, heterocyclic groups; more preferably selected from methyl, ethyl, isopropyl, tert-butyl, phenyl, trifluoromethyl, cyano, acetyl, ethoxycarbonyl, carboxyl, carboxylate, amino, methylamino, dimethylamino, ethylamino, diethylamino, isopropylamino, diisopropylamino, cyclohexylamino, dicyclohexylamino, acetylamino, piperidino, pyrrolidyl, methoxy, ethoxy, propoxy, isopropoxy, butoxy, pentyloxy, phenoxy, hydroxyl, acetoxy, -PO₃H, methylthio, ethylthio, i-propylthio, n-propylthio, phenyltio, mercapto, acetylthio, thiocyano, methylsulfinyl, methylsulfonyl, dimethylsulfonyl, sulfonate groups, fluorine atom, chlorine atom, bromine atom, iodine atom, trimethylsilyl, pentamethyldisilyl, triethylsilyl, trimethylstannyl, furyl, thienyl, pyridyl and morpholino.

The expression "a direct bond" means that a linking group is not present, and a direct bond links the two moieties on either side.

A methylene group refers to an sp³ hybridised carbon connected to two hydrogen groups, i.e. -CH₂R, whilst a methanetriyl group refers to an sp³ hybridised carbon connrected to one hydrogen group, i.e. -CHR₂.

Photoinitiators may be classed as either Norrish Type-I, wherein an electronically excited photoinitiator fractures to form a free radical that acts to initiate the radical polymerisation, or Norrish Type-II, wherein an electronically excited photoinitiator abstracts a hydrogen radical from a further molecule to form a free radical from said further molecule, said free radical acting to initiate the radical polymerisation, as is well understood by the person skilled in the art.

The term "photopolymerization package" refers to a combination of one or more photoinitiators with any component that interacts with said photoinitiator to influence the photoinitiator properties of the photopolymerization package, for example synergists and/or sensitizers. Not included in the term "photopolymerization package" are photopolymerizable monomers or any further additives that do not affect the photoinitiator properties of the photopolymerization package, for examples fillers, pigments, antistatic agents, wetting agents or flow enhancers, adhesion enhancers and/or plasticizers that are present in order to modify either the properties of the polymerizable composition (e.g. the flow properties of said polymerizable composition) or the mechanical properties or appearance of the resultant cured composition. Furthermore, the term "photopolymerization package", in the context of the present invention, means that the components of said package are provided together as a blend, preferably in the form of a blend that is liquid at 25 °C and standard pressure.

In the context of the present invention, for a blend to be termed "liquid" it must be a monophasic liquid, i.e. blends that are suspensions having a solid and a liquid phase would not be classed as "liquid" in the context of the present invention, as would also be the case for emulsions that have multiple immiscible liquid phases.

### Detailed Description

### One or more bisacylphosphine oxide photoinitiators

One of the essential features of the photoinitiator package according to the present invention is one or more bisacylphosphine oxide photoinitiators.

The one or more bisacylphosphine oxide photoinitiators each have a structure according to formula (I) 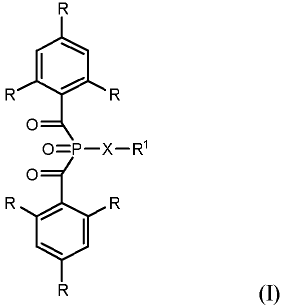
wherein each instance of R is independently selected from the group consisting of C₁-C₄ alkyl;
wherein X is selected from the group consisting of direct single bond, O, S, NR³,-CH₂CO₂-, and

   -CH₂CH₂CO₂-;
wherein R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
wherein R² is 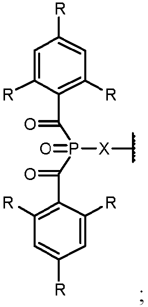
wherein R³ is selected from the group consisting of hydrogen, (CO)R⁴, phenyl, C₁-C₁₂ alkyl, C₂-C₁₂ alkyl being interrupted by one or more O, wherein said C₁-C₁₂ alkyl or interrupted C₂-C₁₂ alkyl is unsubstituted or substituted by one or more C₃-C₇ cycloalkyl, OH or by NCO, C₃-C₁₂ cycloalkyl which is unsubstituted or substituted by one or more C₁-C₄ alkyl, C₁-C₄ alkoxy, OH or by NCO; and
wherein R⁴ is selected from the group consisting of C₁-C₁₂ alkyl or C₂-C₁₂ alkyl which is interrupted by one or more O, wherein said C₁-C₁₂ alkyl or interrupted C₂-C₁₂ alkyl is unsubstituted or substituted by one or more C₃-C₇-cycloalkyl, OH, NCO or by phenyl which is substituted by NCO; C₃-C₁₂ cycloalkyl; C₂-C₁₀ alkenyl which is unsubstituted or substituted by one or more C₁-C₄ alkyl, OH or C₁-C₄ alkoxy; C₆-C₁₄ aryl which is unsubstituted or substituted by C₁-C₁₂ alkyl, C₁-C₁₂ alkoxy, NCO or by NCO-substituted C₁-C₁₂ alkyl.

Each instance of R may be independently selected from the group consisting of C₁-C₄ alkyl, i.e. from methyl, ethyl, n-propyl, i-propyl, n-butyl, s-butyl, i-butyl and t-butyl. It is particularly preferred that each instance of R is selected from methyl and ethyl. Most preferably each instance of R is methyl.

X is selected from the group consisting of direct single bond, O, S, NR³, -CH₂CO₂-, and -CH₂CH₂CO₂-. More preferably, X is selected from the group consisting of direct single bond, O, -CH₂CO₂-, and -CH₂CH₂CO₂-. Yet more preferably, X is selected from the group consisting of direct single bond -CH₂CO₂-, and -CH₂CH₂CO₂-. Most preferably, X is a direct single bond.

When X is selected from the group consisting of direct single bond, -CH₂CO₂-, and - CH₂CH₂CO₂-, this has the consequence that the phosphorus atom of the bisacyl phosphine oxide moiety is bonded to carbon, rather than to oxygen, sulfur, or nitrogen. Bisacyl phosonie oxides having phosphorus bonded to carbon, i.e. X is selected from the group consisting of direct single bond, -CH₂CO₂-, and -CH₂CH₂CO₂- are particularly preferred due to having improved stability and/or improved photoinitiation properties.

R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
wherein R² is

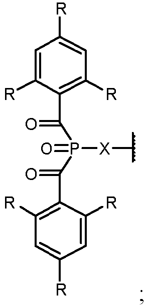

In some embodiments no R² is present, meaning that the structure according to Formula (I) has a single bisacylphosphine oxide moiety.

In such embodiments, it is preferred that R¹ is selected from the group consisting of C₁-C₂₀ alkyl,
-(CH₂CH₂O-)ₙCH₃, and -(CH₂CH₂O-)ₙH, wherein n is an integer in the range from 1 to 20. It is particularly preferred that R¹ is C₁-C₂₀ alkyl.

Especially preferred are embodiments wherein X is single direct bond and R¹ is C₁-C₂₀ alkyl. It is particularly preferred in such embodiments that each instance of R is methyl.

Similarly, embodiments wherein X is O and R¹ is -(CH₂CH₂O-)ₙCH₃ or -(CH₂CH₂O-)ₙH are also especially preferred. It is particularly preferred in such embodiments that each instance of R is methyl.

In other embodiments, at least one instance of R² is present, meaning that the structure according to Formula (I) has more than one bisacylphosphine oxide moiety.

Such embodiments are preferably described by Formula (I) wherein R¹ has a structure according to formula (II): 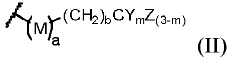
wherein each instance of M is independently selected from (CH₂CH₂O) and (CH₂CH(CH₃)O);
wherein each instance of Y is independently selected from hydrogen and C₁-C₄ alkyl;
wherein each instance of Z has the structure CH₂(M¹)_{c}R²;
wherein each instance of M¹ is independently selected from (OCH₂CH₂) and (OCH(CH₃)CH₂)
wherein a is an integer in the range from 0 to 15;
wherein b is an integer in the range from 0 to 6;
wherein each instance of c is independently an integer in the range from 0 to 15;
wherein m is an integer in the range from 0 to 2; and
wherein each instance of X is independently selected from the group consisting of - CH₂CO₂-, and

   -CH₂CH₂CO₂-.

Such structures are typically formed by combining a central polyol core with multiple BAPO-based carboxylic acid residues, wherein ethylene glycol/propylene glycol spacers (i.e. units M and M¹) are optionally used to separate the central polyol core from the BAPO-based carboxylic acid residues.

Suitable polyol cores include glycerol, wherein b= 0, m = 1 and Y =H, trimethylolpropane, wherein b = 1, m = 1 and Y = ethyl, pentaerythritol, wherein b =1, m = 0, neopentyl glycol, wherein b= 1 m =2 and both instances of Y = methyl, ethylene glycol, wherein b = 0, m = 2, and both instances of Y = H; 1,6-hexanediol, wherein b = 4, m = 2 and both instances of Y = H.

Other suitable polyols include propylene glycol, 1,2-butanediol, 1,3-butanediol, 1,4-butanediol, 2,3-butanediol, 1,2-hexanediol, 1,5-hexanediol, 2,5-hexanediol. The skilled person would be aware of which values of b and m as well as choice of Y correspond to these polyols.

Particularly preferred polyol cores are glycerol, wherein b= 0, m = 1 and Y =H, trimethylolpropane, wherein b = 1, m = 1 and Y = ethyl, pentaerythritol, wherein b =1, m = 0.

When a gylcerol core is used, R¹ is termed "optionally ethoxylated/propoxylated glycerol". When a trimethylolpropane core is used, R¹ is termed "optionally ethoxylated/propoxylated trimethylolpropane".

When a pentaerythritol core is used, R¹ is termed "optionally ethoxylated/propoxylated pentaerythritol".

When a neopentyl glycol core is used, R¹ is termed "optionally ethoxylated/propoxylated neopentyl glycol".

When an ethylene glycol core is used, R¹ is termed "optionally ethoxylated/propoxylated ethylene glycol".

When a 1,6-hexanediol core is used, R¹ is termed "optionally ethoxylated/propoxylated 1,6-hexanediol".

It is particularly preferred that a is an integer in the range from 1 to 15 and each instance of c is an integer in the range from 1 to 15, wherein the sum of a and each instance of c is in the range from 3 to 20, more preferably in the range from 3 to 15, most preferably in the range from 3 to 10.

Such embodiments are termed "ethoxylated/propoxylated polyol", wherein polyol may be glycerol, trimethylolpropane, pentaerythritol, neopentyl glycol, ethylene glycol or 1,6-hexanediol.

It is particularly preferred that R¹ is selected from the group consisting of C₁-C₂₀ alkyl, -(CH₂CH₂O-)ₙCH₃, and -(CH₂CH₂O-)ₙH, wherein n is an integer in the range from 1 to 20, ethoxylated/propoxylated glycerol, ethoxylated/propoxylated trimethylolpropane, and ethoxylated/propoxylated pentaerythritol.

When R¹ is a C₁-C₂₀ alkyl, it is particularly preferred that R¹ is a C₁-C₁₅ alkyl, more preferably a C₁-C₁₂ alkyl.

Examples of particularly preferred bisacylphosphine oxide photoinitiators having a structure according to formula (I) include: 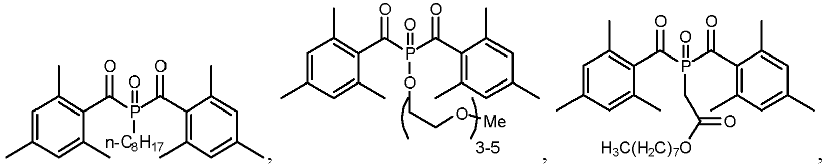 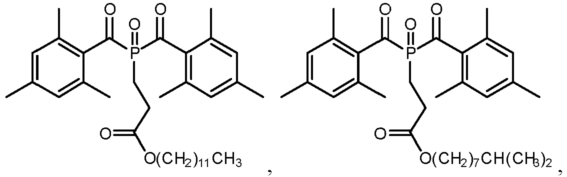 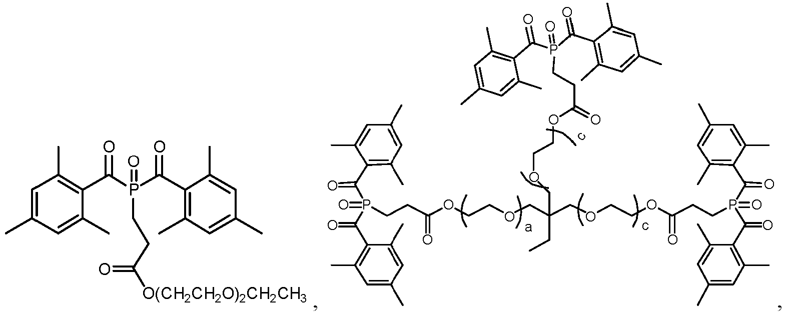 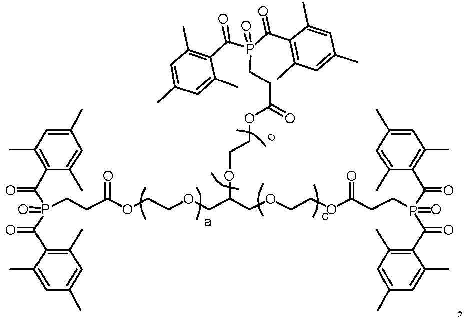 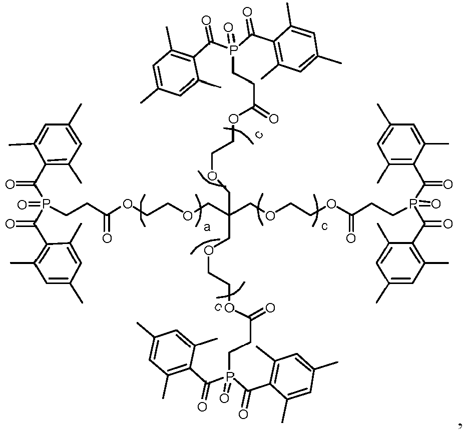 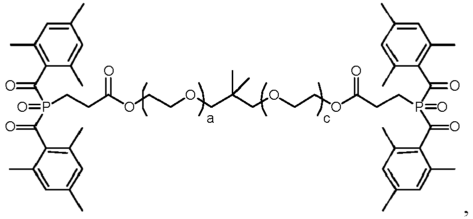 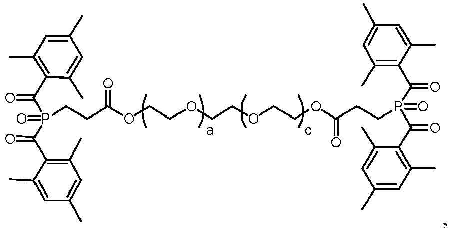 and 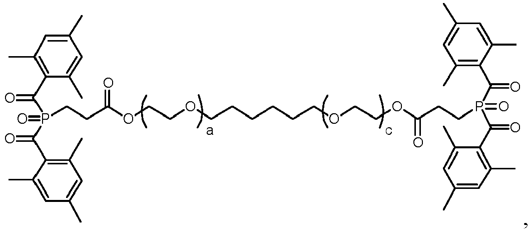 wherein each instance of a and each instance of c are independently as defined for formula (II).

It is particularly preferred that each of the one or more bisacylphosphine oxide photoinitiators having a structure according to formula (I) are liquid at 25 °C and standard pressure.

### One or more further acylphosphine oxide photoinitiators

Another essential feature of the photoinitiator package according to the present invention is the presence of one or more further acylphosphine oxide photoinitiators.

In the broadest sense, each of the further acylphosphine oxide photoinitiators may be any acylphosphine oxide photoinitiator having a structure not according to formula (I) 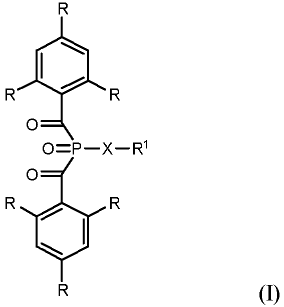
wherein each instance of R is independently selected from the group consisting of C₁-C₄ alkyl;
wherein X is selected from the group consisting of direct single bond, O, S, NR³,-CH₂CO₂-, and

   -CH₂CH₂CO₂-;
wherein R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
wherein R² is 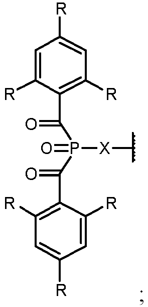
wherein R³ is selected from the group consisting of hydrogen, (CO)R⁴, phenyl, C₁-C₁₂ alkyl, C₂-C₁₂ alkyl being interrupted by one or more O, wherein said C₁-C₁₂ alkyl or interrupted C₂-C₁₂ alkyl is unsubstituted or substituted by one or more C₃-C₇ cycloalkyl, OH or by NCO, C₃-C₁₂ cycloalkyl which is unsubstituted or substituted by one or more C₁-C₄ alkyl, C₁-C₄ alkoxy, OH or by NCO; and
wherein R⁴ is selected from the group consisting of C₁-C₁₂ alkyl or C₂-C₁₂ alkyl which is interrupted by one or more O, wherein said C₁-C₁₂ alkyl or interrupted C₂-C₁₂ alkyl is unsubstituted or substituted by one or more C₃-C₇-cycloalkyl, OH, NCO or by phenyl which is substituted by NCO; C₃-C₁₂ cycloalkyl; C₂-C₁₀ alkenyl which is unsubstituted or substituted by one or more C₁-C₄ alkyl, OH or C₁-C₄ alkoxy; C₆-C₁₄ aryl which is unsubstituted or substituted by C₁-C₁₂ alkyl, C₁-C₁₂ alkoxy, NCO or by NCO-substituted C₁-C₁₂ alkyl.

Each of the one or more further acylphosphine oxide photoinitiators is preferably either a monoacylphosphine oxide photoinitiator or a bisacylphosphine oxide photoinitiator having a structure not according to formula (I).

It is preferred that the one or more monoacylphosphine oxide photoinitiators has a structure according to formula (III): 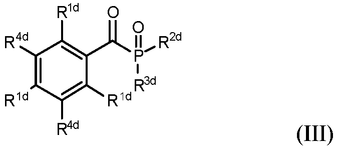
wherein each instance of R^{1d} is independently selected from the group consisting of C₁-C₄ alkyl;
wherein R^{2d} is selected from the group consisting of C₁-C₁₀ alkyl, C₆-C₁₀ aryl and combinations thereof;
wherein R^{3d} is selected from the group consisting of C₆-C₁₀ aryl and OR^{5d};
wherein each R^{4d} is independently selected from the group consisting of hydrogen, C₁-C₄ alkyl, and C(O)R^{6d};
wherein R^{5d} is selected from the group consisting of hydrogen, C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R^{7d};
wherein R^{6d} is selected from the group consisting of C₁-C₄ alkyl, C₆-C₁₀ aryl and combinations thereof;
wherein R^{7d} is

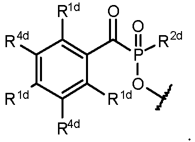

Each instance of R^{1d} may be independently selected from the group consisting of C₁-C₄ alkyl, i.e. from methyl, ethyl, n-propyl, i-propyl, n-butyl, s-butyl, i-butyl and t-butyl. It is particularly preferred that each instance of R^{1d} is selected from methyl and ethyl. Most preferably, each instance of R^{1d} is methyl.

R^{2d} is preferably selected from the group consisting of C₁-C₄ alkyl, phenyl, and combinations thereof. Most preferably, R^{2d} is phenyl.

R^{3d} is preferably selected from the group consisting of phenyl and OR^{5d}, most preferably R^{3d} is OR^{5d}.

Each R^{4d} is preferably independently selected from the group consisting of hydrogen and C(O)R^{6d}. Most preferably, each R^{4d} is hydrogen.

R^{6d} is preferably selected from the group consisting of C₁-C₄ alkyl, phenyl, and combinations thereof. Most preferably, R^{6d} is phenyl.

R^{7d} is preferably 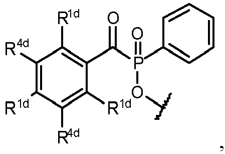 most preferably

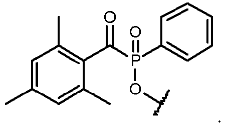

In some embodiments, no R^{7d} is present, meaning that the structure according to Formula (III) has a single monoacylphosphine oxide moiety.

In such embodiments, it is preferred that R^{5d} is selected from the groups consisting of hydrogen, C₁-C₂₀ alkyl, -(CH₂CH₂O-)ₙCH₃, and -(CH₂CH₂O-)ₙH, wherein n is an integer in the range from 1 to 20. It is particularly preferred that R¹ is C₁-C₂₀ alkyl, more preferably C₁-C₆ alkyl. Most preferably, R^{5d} is ethyl.

In other embodiments, at least one instance of R^{7d} is present, meaning that the structure according to Formula (III) has more than one monoacylphosphine oxide moiety.

Such embodiments are preferably described by Formula (III) wherein R^{5d} has a structure according to formula (IV): 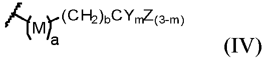
wherein each instance of M is independently selected from (CH₂CH₂O) and (CH₂CH(CH₃)O);
wherein each instance of Y is independently selected from hydrogen and C₁-C₄ alkyl; wherein each instance of Z has the structure CH₂(M¹)_{c}R^{7d};
wherein each instance of M¹ is independently selected from (OCH₂CH₂) and (OCH(CH₃)CH₂)
wherein a is an integer in the range from 0 to 15;
wherein b is an integer in the range from 0 to 6;
wherein each instance of c is independently an integer in the range from 0 to 15; and
wherein m is an integer in the range from 0 to 2.

Such structures are typically formed by combining a central polyol core with multiple monoacylphosphinate residues, wherein ethylene glycol/propylene glycol spacers (i.e. units M and M¹) are optionally used to separate the central polyol core from the monoacylphosphinate residues.

Suitable polyol cores include glycerol, wherein b= 0, m = 1 and Y =H, trimethylolpropane, wherein b = 1, m = 1 and Y = ethyl, pentaerythritol, wherein b =1, m = 0, neopentyl glycol, wherein b= 1 m =2 and both instances of Y = methyl, ethylene glycol, wherein b = 0, m = 2, and both instances of Y = H; 1,6-hexanediol, wherein b = 4, m = 2 and both instances of Y = H.

Other suitable polyols include propylene glycol, 1,2-butanediol, 1,3-butanediol, 1,4-butanediol, 2,3-butanediol, 1,2-hexanediol, 1,5-hexanediol, 2,5-hexanediol. The skilled person would be aware of which values of b and m as well as choice of Y correspond to these polyols.

Particularly preferred polyol cores are glycerol, wherein b= 0, m = 1 and Y =H, trimethylolpropane, wherein b = 1, m = 1 and Y = ethyl, pentaerythritol, wherein b =1, m = 0.

When a gylcerol core is used, R^{5d} is termed "optionally ethoxylated/propoxylated glycerol".

When a trimethylolpropane core is used, R^{5d} is termed "optionally ethoxylated/propoxylated trimethylolpropane".

When a pentaerythritol core is used, R^{5d} is termed "optionally ethoxylated/propoxylated pentaerythritol".

When a neopentyl glycol core is used, R^{5d} is termed "optionally ethoxylated/propoxylated neopentyl glycol".

When an ethylene glycol core is used, R^{5d} is termed "optionally ethoxylated/propoxylated ethylene glycol".

When a 1,6-hexanediol core is used, R^{5d} is termed "optionally ethoxylated/propoxylated 1,6-hexanediol".

It is particularly preferred that a is an integer in the range from 1 to 15 and each instance of c is an integer in the range from 1 to 15, wherein the sum of a and each instance of c is in the range from 3 to 20, more preferably in the range from 3 to 15, most preferably in the range from 3 to 10.

Such embodiments are termed "ethoxylated/propoxylated polyol", wherein polyol may be glycerol, trimethylolpropane, pentaerythritol, neopentyl glycol, ethylene glycol or 1,6-hexanediol.

It is particularly preferred that R^{5d} is selected from the group consisting of C₁-C₆ alkyl, ethoxylated/propoxylated glycerol, ethoxylated/propoxylated trimethylolpropane, and ethoxylated/propoxylated pentaerythritol.

Examples of particularly preferred monoacylphosphine oxide photoinitiators having a structure according to formula (III) include: 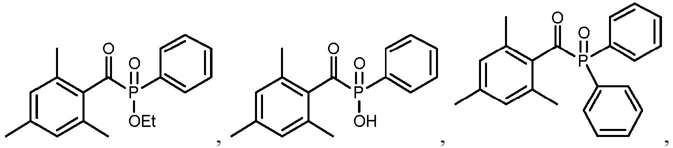 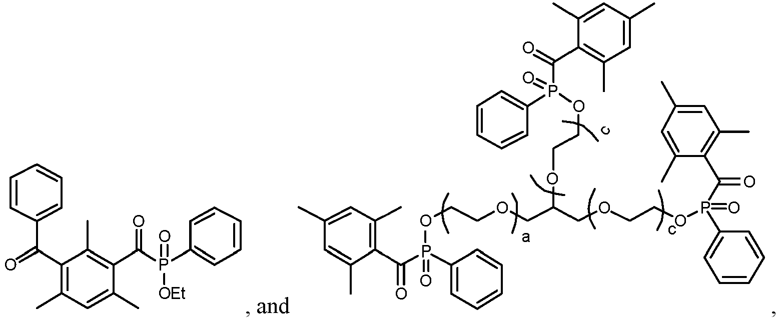 wherein each instance of a and each instance of c are independently as defined for formula (IV).

It is particularly preferred that the monoacylphosphine oxide according to formula (III) has a formula according to formula (IIIa), more preferably according to formula (IIIb), most preferably according to formula (IIIc): 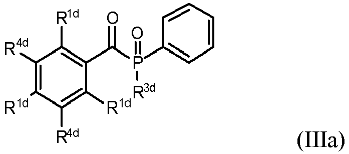 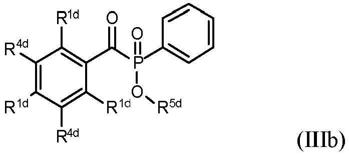 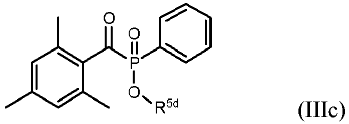 wherein R^{1d}, R^{3d}, R^{4d} and R^{5d} are as defined for formula (III).

It is particularly preferred that each of the one or more further monoacylphosphine oxide photoinitiators are liquid at 25 °C and standard pressure.

Suitable bisacylphosphine oxide photointitators having a structure not according to formula (I) include, but are not limited to:

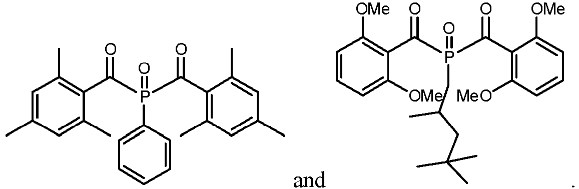

Of these suitable bisacylphosphine oxide photoinitiators, bis(2,4,6-trimethylbenzoyl)phenyl phosphine oxide is preferred.

It is particularly preferred that each of the one or more further bisacylphosphine oxide photoinitiators are solid at 25 °C and standard pressure.

It is particularly preferred that the one or more one or more further acylphosphine oxide photoinitiators having a structure not according to formula (I) comprises one or more monoacylphosphine photoinitiators and one or more bisacylphosphine oxide photoinitiators having a structure not according to formula (I).

### One or more optical brightener sensitizers

The other essential feature of the photoinitiator package according to the present invention is the presence of one or more optical brightener sensitizers.

As would be understood by the person skilled in the art, the term "sensitizer" in "one or more optical brightener sensitizer" explains the purpose of the optical brightener in the photoinitiator package and does not limit the choice of the optical brightener that may be employed.

Furthermore, the person skilled in the art would be well aware that an optical brightener is a chemical compound that absorbs light in the ultraviolet and violet region of the EM-spectrum and re-emits the light in the blue region via fluorescence. Optical brighteners have been employed in laundry detergents, in paper manufacturing, cosmetics, and textile whitening, as well as in some photopolymerizable compositions for the purpose of improving the optical properties of the cured composition.

In the broadest sense, any compound known for use as an optical brightener may be used in the photoinitiator package according to the present invention.

Examples of such well-known optical brighteners include compounds with building blocks including stilbene, triazine, thioazole, benzoxale, coumarin, xanthene, triazole, oxazole, thiophene and pyrazoline.

Particularly preferred are optical brighteners having coumarin or (benz)oxazole cores.

In a first particularly preferred embodiment, at least one of the one or more optical brightener sensitizers has a structure according to formula (V): 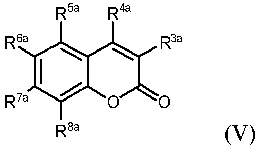
wherein R^{3a} is selected from the group consisting of hydrogen, C₁-C₁₀ alkyl, C₆-C₁₄ aryl, and C₆-C₁₄ heteroaryl,
R^{4a} is selected from the group consisting of hydrogen, C₁-C₁₀ alkyl, and OR^{1a}, and
each of R^{5d} to R^{8a} is independently selected from the group consisting of hydrogen, halogen, alkyl, OR^{1a}, and NR^{2a}₂;
wherein each instance of R^{1a} is selected from hydrogen, C₁-C₁₀ alkyl and C₆-C₁₄ aryl, and each instance of R^{2a} is selected from hydrogen, C₁-C₁₀ alkyl and C₆-C₁₄ aryl, wherein each instance of R^{1a} to R^{8a} may optionally be joined to one or more further instances of R^{1a} to R^{8a} to form one or more 5-membered or 6-membered rings.

In one preferred embodiment, R^{3a} is selected from the group consisting of hydrogen and C₁-C₁₀ alkyl, or R^{4a} is selected from the group consisting of hydrogen and C₁-C₁₀ alkyl.

In another preferred embodiment, R^{3a} is selected from the group consisting of hydrogen and C₁-C₁₀ alkyl, and R^{4a} is selected from the group consisting of hydrogen and C₁-C₁₀ alkyl.

In another preferred embodiment, R^{1a} is selected from the group consisting of OR^{1a}, and NR^{2a}₂, most preferably R^{7a} is NR^{2a}₂.

In a particularly preferred embodiment, R^{3a} is selected from the group consisting of hydrogen and C₁-C₁₀ alkyl or R^{4a} is selected from the group consisting of hydrogen and C₁-C₁₀ alkyl, whilst R^{7a} is selected from the group consisting of OR^{1a}, and NR^{2a}₂, most preferably R^{7a} is NR^{2a}₂.

In an especially preferred embodiment, R^{3a} is selected from the group consisting of hydrogen and C₁-C₁₀ alkyl, R^{4a} is selected from the group consisting of hydrogen and C₁-C₁₀ alkyl, and R^{7a} is selected from the group consisting of OR^{1a}, and NR^{2a}₂, most preferably R^{7a} is NR^{2a}₂.

At least one of, preferably all of, the coumarin-based sensitizers are selected from the group consisting of coumarin, 7-amino-4-(trifluoromethyl)coumarin, 3-(2-benzothiazolyl)-7-(diethylamino)coumarin, 7-hydroxy-4-(trifluoromethyl)coumarin, 7-(ethylamino)-4,6-dimethylcoumarin, 7-methoxy-4-(trifluoromethyl)coumarin, 7-ethoxy-4-(trifluoromethyl)coumarin, 7-amino-4-methylcoumarin, 7-(diethylamino)-4-methylcoumarin, 3-(2-benzoxazolyl)-7-(diethylamino)coumarin, 7-methylcoumarin, 7-methoxycoumarin, 4-hydroxycoumarin, 5,7-dimethoxycoumarin, 3-(3-biphenyl-4-yl-1,2,3,4-tetrahydro-1-naphthyl)-4-hydroxycoumarin, 6-methylcoumarin, 3-chloro-7-hydroxy-4-methylcoumarin, 7-hydroxycoumarin, 7-hydroxy-6-methoxycoumarin, 7-methoxy-6-hydroxycoumarin, 6-hydroxycoumarin, 7,8-dihydroxy-4-methylcoumarin, 7-Hydroxy-4-methylcoumarin, 7-(dimethylamino)-4-methylcoumarin, 2,3,6,7-Tetrahydro-9-methyl-1*H*,5*H*, 11*H-*[1]benzopyrano[6,7,8-ij]quinolizin-11-one, 7-(diethylamino)-4-(trifluoromethyl)-coumarin, and 7-(ethylamino)-4-(trifluoromethyl)coumarin.

More preferably, at least one of, preferably all of, of the coumarin-based sensitizers are selected from the group consisting of coumarin, 3-(2-benzothiazolyl)-7-(diethylamino)coumarin, 7-methoxy-4-(trifluoromethyl)coumarin, 7-ethoxy-4-(trifluoromethyl)coumarin, 7-(diethylamino)-4-methylcoumarin, 3-(2-benzoxazolyl)-7-(diethylamino)coumarin, 7-methylcoumarin, 7-methoxycoumarin, 5,7-dimethoxycoumarin, 6-methylcoumarin, 7-(dimethylamino)-4-methylcoumarin, 2,3,6,7-Tetrahydro-9-methyl-1*H*,5*H,*11*H-*[1]benzopyrano[6,7,8-*ij*]quinolizin-11-one, 7-(diethylamino)-4-(trifluoromethyl)-coumarin, and 7-(ethylamino)-4-(trifluoromethyl)coumarin.

Most preferably, at least one of, preferably all of, of the coumarin-based sensitizers are selected from the group consisting of coumarin, 7-(diethylamino)-4-methylcoumarin, 7-methylcoumarin, 7-methoxycoumarin, 5,7-dimethoxycoumarin, and 7-(diethylamino)-4-(trifluoromethyl)-coumarin.

In a second particularly preferred embodiment, at least one of the one or more optical brightener sensitizers has a structure according to formula (VI): 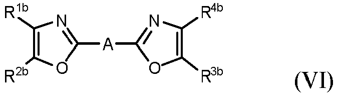
wherein each of R^{1b} to R^{4b} is independently selected from the group consisting of hydrogen, C₁-C₁₀ alkyl and C₆-C₁₄ aryl, wherein R^{1b} and R^{2b} may be joined to form a 6-membered saturated or unsaturated ring, which may be substituted by one or more substituents selected from the group consisting of hydrogen C₁-C₁₀ alkyl and C₆-C₁₄ aryl and wherein R^{3b} and R^{4b} may be joined to form a 6-membered saturated or unsaturated ring, which may be substituted by one or more substituents selected from the group consisting of hydrogen C₁-C₁₀ alkyl and C₆-C₁₄ aryl; and
wherein A represents a linking group represented by any of the following formulas (VII) to (XI): 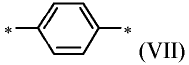 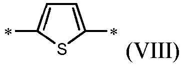 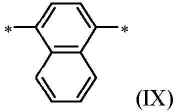 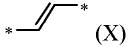 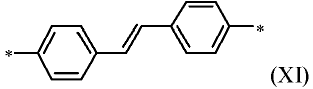
wherein each * represents a bonding position of A in each formula.

Each of R^{1b} to R^{4b} is independently selected from the group consisting of hydrogen, C₁-C₁₀ alkyl and C₆-C₁₄ aryl, wherein R^{1b} and R^{2b} may be joined to form a 6-membered saturated or unsaturated ring, which may be substituted by one or more substituents selected from the group consisting of hydrogen C₁-C₁₀ alkyl and C₆-C₁₄ aryl and wherein R^{3b} and R^{4b} may be joined to form a 6-membered saturated or unsaturated ring, which may be substituted by one or more substituents selected from the group consisting of hydrogen C₁-C₁₀ alkyl and C₆-C₁₄ aryl.

In one embodiment, each of R^{1b} to R^{4b} is independently selected from the group consisting of hydrogen, C₁-C₆ alkyl and C₆-C₁₀ aryl.

In a particularly preferred embodiment, both R^{1b} and R^{3b} are joined to R^{2b} and R^{4b}, respectively, to form 6-membered saturated or unsaturated rings, which may be substituted by one or more substituents selected from the group consisting of hydrogen C₁-C₁₀ alkyl and C₆-C₁₄ aryl.

In one embodiment of said particularly preferred embodiment, each 6-membered ring formed is aromatic, meaning that at least one of the the one or more oxazole-based sensitizers is a benzoxazole-based sensitizer, having a structure according to formula (XII): 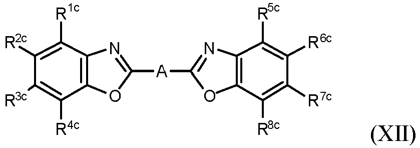 wherein each of R^{1c} to R^{8c} is independently selected from the group consisting of hydrogen, C₁-C₁₀ alkyl and C₆-C₁₄ aryl.

Preferably each of R^{1c} to R^{8c} is independently selected from the group consisting of hydrogen, C₁-C₆ alkyl and C₆-C₁₀ aryl.

In one embodiment, each of the one or more oxazole-based sensitizers has a structure according to formula (XII).

In other embodiments, at least one of the one or more oxazole-based sensitizers has a structure according to formula (XII), whilst any remaining oxazole-based sensitizers in the photoinitiator package have other structures according to formula (VI).

Particularly preferred compounds according to Formula (VI) include 2,5-thiophenediylbis(5-tert-butyl-1,3-benzoxazole), 2,2'-(vinylenedi-p-phenylene)bisbenzoxazole, 2,2'-(naphthalene-1,4-diyl)bis(benzoxazole), 2-[4-[2-[4-(benzoxazol-2-yl)phenyl]vinyl]phenyl]-5-methylbenzoxazole, 2,2'-(1,4-phenylene)bis[5-phenyl-oxazole].

### One or more amines

An optional component of the photoinitiator package is one or more amines.

In the broadest sense, the one or more amines according to the present invention may be any amine, including aliphatic, cycloaliphatic, aromatic, aryl aliphatic, heterocyclic, oligomeric or polymeric amines. They may be primary, secondary or tertiary amines, for example, butyl amine, dibutylamine, tributylamine, cyclohexyl amine, benzyldimethyl amine, dicyclohexyl amine, N-phenyl glycine, triethyl amine, phenyl-diethanol amine, triethanolamine, piperidine, piperazine, morpholine, quinolone, esters of dimethylamino benzoic acid, and corresponding derivatives. Furthermore, amine-modified acrylates can be used. Examples of such amine-modified acrylates include acrylates modified by reaction with a primary or secondary amine that are 15 described in US 3,844,916, EP 280222, US 5,482,649 or US 5,734,002.

Multifunctional amine and polymeric amine derivatives are also suitable for use are Omnipol ASA from IGM Resins B.V., Genopol AB-2 from Rahn A.G., Speedcure 7040 from Lambson Limited or those described in US2013/0012611.

It would be understood by the person skilled the art that the term "amine" does not include amides or imides, irrespective of whether the nitrogen of the amide/imide is bonded to an alkyl group. Likewise, ammonium salts would not be amines.

It is preferred that the one or more amines are not Type-I or Type-II photoinitiators, such as well-known aminoketone Type-I initiators. It is further preferred that the one or more amines are not optical brighteners, i.e. compounds that absorb light in the ultraviolet and violet region of the EM-spectrum and re-emits the light in the blue region via fluorescence. As such, it is clear that the only role of the amine in the photopolymerization package is to act as a synergist, improving the effect of the one or more bisacylphosphine oxide photoinitiators having a structure according to formula (I) and/or the one or more optical brightener sensitizers.

It is preferred that the one or more amines have a so-called alpha-hydrogen, i.e. a hydrogen bonded to a carbon that is directly bonded to the nitrogen of the amine. It is particularly preferred that this hydrogen is bonded to an sp³-hybridized carbon. As such, it is preferred that the amine has a nitrogen atom having a direct single bond to either a methyl group (i.e. CH₃), a methylene group (i.e. the CH₂ of a CH₂R) or a methanetriyl group (i.e. the CH of a CHR₂).

Without wishing to be bound by theory, it is believed that the alpha-hydrogen may be easily abstracted by radicals, forming a stabilized alpha-amino-radical, which can play a role in improving the rate of curing, in particular by scavenging molecular oxygen, which may retard the polymerization reaction.

It is particularly preferred that the nitrogen atom is bonded to at least one alkyl group. It is further preferred that the nitrogen atom is bounded to at least two alkyl groups.

In one particularly preferred embodiment, the one or more amines are independently selected from the group consisting of amines having the formula NRAR^{B}R^{C}, wherein R^{A} and R^{B} are independently selected from optionally substituted alkyl groups and R^{C} is selected from the group consisting of optionally substituted alkyl groups and optionally substituted aryl groups.

In said embodiment, the term "optionally substituted aryl groups" does not include aryl groups that have two or more substituents that are linked to form a fused ring system, such as a quinoline, an indole, or a coumarin. Likewise, the term "optionally substituted alkyl groups" does not include substitution that would result in the group no longer being considered as an alkyl group, such as acyl groups (i.e. =O substitution at the first carbon atom of the alkyl chain).

### Photoinitiator package

The photoinitiator package according to the present invention comprises one or more bisacylphosphine oxide photoinitiators as described above and one or more optical brightener sensitizers as described above.

It is preferred that the photoinitiator package comprises, more preferably consists of:
a) an amount in the range from 15 to 40 wt.-%, more preferably in the range from 18 to 35 wt.-%, most preferably in the range from 19 to 30 wt.-%, relative to the total weight of the photoinitiator package, of the one or more bisacylphosphine oxide photoinitiators having a structure according to formula (I);
b) an amount in the range from 30 to 75 wt.-%, more preferably in the range from 40 to 70 wt.-%, most preferably in the range from 50 to 60 wt.-%, relative to the total weight of the photoinitiator package, of the one or more acylphosphine oxide photoinitiators having a structure not according to formula (I);
c) an amount in the range from 5 to 30 wt.-%, more preferably in the range from 10 to 25 wt.-%, most preferably in the range from 15 to 22 wt.-%, relative to the total weight of the photoinitiator package, of the one or more optical brightener sensitizers; and
d) optionally, an amount in the range from 1 to 30 wt.-%, more preferably in the range from 3 to 25 wt.-%, most preferably in the range from 5 to 20 wt.-%, relative to the total weight of the photoinitiator package, of one or more amines.

In one embodiment, the photoinitiator package comprises, more preferably consists of:
a) an amount in the range from 15 to 40 wt.-%, more preferably in the range from 18 to 35 wt.-%, most preferably in the range from 19 to 30 wt.-%, relative to the total weight of the photoinitiator package, of the one or more bisacylphosphine oxide photoinitiators having a structure according to formula (I);
b) an amount in the range from 30 to 75 wt.-%, more preferably in the range from 40 to 70 wt.-%, most preferably in the range from 50 to 60 wt.-%, relative to the total weight of the photoinitiator package, of the one or more acylphosphine oxide photoinitiators having a structure not according to formula (I);
c) an amount in the range from 5 to 30 wt.-%, more preferably in the range from 10 to 25 wt.-%, most preferably in the range from 15 to 22 wt.-%, relative to the total weight of the photoinitiator package, of the one or more optical brightener sensitizers; and
d) an amount in the range from 1 to 30 wt.-%, more preferably in the range from 3 to 25 wt.-%, most preferably in the range from 5 to 20 wt.-%, relative to the total weight of the photoinitiator package, of one or more amines.

In another embodiment, the photoinitiator package comprises, more preferably consists of:
a) an amount in the range from 15 to 40 wt.-%, more preferably in the range from 18 to 35 wt.-%, most preferably in the range from 19 to 30 wt.-%, relative to the total weight of the photoinitiator package, of the one or more bisacylphosphine oxide photoinitiators having a structure according to formula (I);
b) an amount in the range from 30 to 75 wt.-%, more preferably in the range from 40 to 70 wt.-%, most preferably in the range from 50 to 60 wt.-%, relative to the total weight of the photoinitiator package, of the one or more acylphosphine oxide photoinitiators having a structure not according to formula (I); and
c) an amount in the range from 5 to 30 wt.-%, more preferably in the range from 10 to 25 wt.-%, most preferably in the range from 15 to 22 wt.-%, relative to the total weight of the photoinitiator package, of the one or more optical brightener sensitizers.

It is particularly preferred that the photoinitiator package comprises, more preferably consists of:
a) an amount in the range from 18 to 35 wt.-%, relative to the total weight of the photoinitiator package, of the one or more bisacylphosphine oxide photoinitiators having a structure according to formula (I);
b) an amount in the range from 40 to 70 wt.-%, relative to the total weight of the photoinitiator package, of the one or more acylphosphine oxide photoinitiators having a structure not according to formula (I);
c) an amount in the range from 10 to 25 wt.-%, relative to the total weight of the photoinitiator package, of the one or more optical brightener sensitizers; and
d) optionally, an amount in the range from 3 to 25 wt.-%, relative to the total weight of the photoinitiator package, of one or more amines.

It is especially preferred that the photoinitiator package comprises, more preferably consists of:
a) an amount in the range from 19 to 30 wt.-%, relative to the total weight of the photoinitiator package, of the one or more bisacylphosphine oxide photoinitiators having a structure according to formula (I);
b) an amount in the range from 50 to 60 wt.-%, relative to the total weight of the photoinitiator package, of the one or more acylphosphine oxide photoinitiators having a structure not according to formula (I);
c) an amount in the range from 15 to 22 wt.-%, relative to the total weight of the photoinitiator package, of the one or more optical brightener sensitizers; and
d) optionally, an amount in the range from 5 to 20 wt.-%, relative to the total weight of the photoinitiator package, of one or more amines.

As stated above, the one or more further acylphosphine oxide photoinitiators preferably comprises one or more monoacylphosphine photoinitiators and one or more bisacylphosphine oxide photoinitiators having a structure not according to formula (I).

In such embodiments, the photoinitiator package preferably comprises, more preferably consists of:
a) an amount in the range from 15 to 40 wt.-%, more preferably in the range from 18 to 35 wt.-%, most preferably in the range from 19 to 30 wt.-%, relative to the total weight of the photoinitiator package, of the one or more bisacylphosphine oxide photoinitiators having a structure according to formula (I);
b) an amount in the range from 1 to 30 wt.-%, more preferably in the range from 4 to 20 wt.-%, most preferably in the range from 7 to 15 wt.-%, relative to the total weight of the photoinitiator package, of the one or more bisacylphosphine oxide photoinitiators having a structure not according to formula (I);
c) an amount in the range from 30 to 70 wt.-%, more preferably in the range from 35 to 60 wt.-%, most preferably in the range from 40 to 55 wt.-%, relative to the total weight of the photoinitiator package, of the one or more monoacylphosphine oxide photoinitiators;
d) an amount in the range from 5 to 30 wt.-%, more preferably in the range from 10 to 25 wt.-%, most preferably in the range from 15 to 22 wt.-%, relative to the total weight of the photoinitiator package, of the one or more optical brightener sensitizers; and
e) optionally, an amount in the range from 1 to 30 wt.-%, more preferably in the range from 3 to 25 wt.-%, most preferably in the range from 5 to 20 wt.-%, relative to the total weight of the photoinitiator package, of one or more amines.

It is preferred that the photoinitiator package preferably comprises, more preferably consists of:
a) an amount in the range from 18 to 35 wt.-%, relative to the total weight of the photoinitiator package, of the one or more bisacylphosphine oxide photoinitiators having a structure according to formula (I);
b) an amount in the range from 4 to 20 wt.-%, relative to the total weight of the photoinitiator package, of the one or more bisacylphosphine oxide photoinitiators having a structure not according to formula (I);
c) an amount in the range from 35 to 60 wt.-%, relative to the total weight of the photoinitiator package, of the one or more monoacylphosphine oxide photoinitiators;
d) an amount in the range from 10 to 25 wt.-%, relative to the total weight of the photoinitiator package, of the one or more optical brightener sensitizers; and
e) optionally, an amount in the range from 3 to 25 wt.-%, relative to the total weight of the photoinitiator package, of one or more amines.

It is particularly preferred that the photoinitiator package preferably comprises, more preferably consists of:
a) an amount in the range from 19 to 30 wt.-%, relative to the total weight of the photoinitiator package, of the one or more bisacylphosphine oxide photoinitiators having a structure according to formula (I);
b) an amount in the range from 7 to 15 wt.-%, relative to the total weight of the photoinitiator package, of the one or more bisacylphosphine oxide photoinitiators having a structure not according to formula (I);
c) an amount in the range from 40 to 55 wt.-%, relative to the total weight of the photoinitiator package, of the one or more monoacylphosphine oxide photoinitiators;
d) an amount in the range from 15 to 22 wt.-%, relative to the total weight of the photoinitiator package, of the one or more optical brightener sensitizers; and
e) optionally, an amount in the range from 5 to 20 wt.-%, relative to the total weight of the photoinitiator package, of one or more amines.

It is preferred that the photoinitiator package preferably comprises, more preferably consists of:
a) an amount in the range from 15 to 40 wt.-%, more preferably in the range from 18 to 35 wt.-%, most preferably in the range from 19 to 30 wt.-%, relative to the total weight of the photoinitiator package, of the one or more bisacylphosphine oxide photoinitiators having a structure according to formula (I);
b) an amount in the range from 1 to 30 wt.-%, more preferably in the range from 4 to 20 wt.-%, most preferably in the range from 7 to 15 wt.-%, relative to the total weight of the photoinitiator package, of the one or more bisacylphosphine oxide photoinitiators having a structure not according to formula (I);
c) an amount in the range from 30 to 70 wt.-%, more preferably in the range from 35 to 60 wt.-%, most preferably in the range from 40 to 55 wt.-%, relative to the total weight of the photoinitiator package, of the one or more monoacylphosphine oxide photoinitiators;
d) an amount in the range from 5 to 30 wt.-%, more preferably in the range from 10 to 25 wt.-%, most preferably in the range from 15 to 22 wt.-%, relative to the total weight of the photoinitiator package, of the one or more optical brightener sensitizers; and
e) optionally, an amount in the range from 1 to 30 wt.-%, more preferably in the range from 3 to 25 wt.-%, most preferably in the range from 5 to 20 wt.-%, relative to the total weight of the photoinitiator package, of one or more amines.

In one embodiment the photoinitiator package preferably comprises, more preferably consists of:
a) an amount in the range from 15 to 40 wt.-%, more preferably in the range from 18 to 35 wt.-%, most preferably in the range from 19 to 30 wt.-%, relative to the total weight of the photoinitiator package, of the one or more bisacylphosphine oxide photoinitiators having a structure according to formula (I);
b) an amount in the range from 1 to 30 wt.-%, more preferably in the range from 4 to 20 wt.-%, most preferably in the range from 7 to 15 wt.-%, relative to the total weight of the photoinitiator package, of the one or more bisacylphosphine oxide photoinitiators having a structure not according to formula (I);
c) an amount in the range from 30 to 70 wt.-%, more preferably in the range from 35 to 60 wt.-%, most preferably in the range from 40 to 55 wt.-%, relative to the total weight of the photoinitiator package, of the one or more monoacylphosphine oxide photoinitiators; and
d) an amount in the range from 5 to 30 wt.-%, more preferably in the range from 10 to 25 wt.-%, most preferably in the range from 15 to 22 wt.-%, relative to the total weight of the photoinitiator package, of the one or more optical brightener sensitizers.

In another embodiment, the photoinitiator package preferably comprises, more preferably consists of:
a) an amount in the range from 15 to 40 wt.-%, more preferably in the range from 18 to 35 wt.-%, most preferably in the range from 19 to 30 wt.-%, relative to the total weight of the photoinitiator package, of the one or more bisacylphosphine oxide photoinitiators having a structure according to formula (I);
b) an amount in the range from 1 to 30 wt.-%, more preferably in the range from 4 to 20 wt.-%, most preferably in the range from 7 to 15 wt.-%, relative to the total weight of the photoinitiator package, of the one or more bisacylphosphine oxide photoinitiators having a structure not according to formula (I);
c) an amount in the range from 30 to 70 wt.-%, more preferably in the range from 35 to 60 wt.-%, most preferably in the range from 40 to 55 wt.-%, relative to the total weight of the photoinitiator package, of the one or more monoacylphosphine oxide photoinitiators;
d) an amount in the range from 5 to 30 wt.-%, more preferably in the range from 10 to 25 wt.-%, most preferably in the range from 15 to 22 wt.-%, relative to the total weight of the photoinitiator package, of the one or more optical brightener sensitizers; and
e) an amount in the range from 1 to 30 wt.-%, more preferably in the range from 3 to 25 wt.-%, most preferably in the range from 5 to 20 wt.-%, relative to the total weight of the photoinitiator package, of one or more amines.

Furthermore, it is required that the photoinitiator package is present in the form of a blend that is liquid at 25 °C and standard pressure.

This means that the one or more bisacylphosphine oxides, the one or more further acylphosphine oxide photoinitiators, the one or more optical brightener sensitizers and the optional one or more amines must be miscible and form a stable liquid blend at the indicated temperature and pressure, rather than being present as a mixture of dry powders or as a suspension or emulsion, for example.

It is particularly preferred that the photoinitiator package is present in the form of a blend that is liquid at 25 °C and standard pressure and has a viscosity, determined according to the method in the determination methods, in the range from 1000 to 15000 cP, more preferably in the range from 3000 to 13000 cP, most preferably in the range from 5000 to 12000 cP. This low viscosity enables the liquid stable blend to be easily processed.

### Photopolymerizable composition

In a second aspect, the present invention is also directed to a photopolymerizable composition.

In the broadest sense, the photopolymerizable composition comprises or consist of:
a) one or more ethylenically unsaturated, free-radical polymerizable compounds;
b) the photoinitiator package according to the first aspect.

It is preferred that the photopolymerizable composition comprises or consists of:
a) an amount in the range from 30 to 99.0 wt.-%, more preferably in the range from 50 to 95.0 wt.-%, most preferably in the range from 70 to 90 wt.-%, relative to the total weight of the photopolymerizable composition, of the one or more ethylenically unsaturated, free-radical polymerizable compounds;
b) an amount in the range from 0.5 to 50 wt.-%, more preferably in the range from 0.8 to 40 wt.-%, most preferably in the range from 1.0 to 30 wt.-%, relative to the total weight of the photopolymerizable composition, of the photoinitiator package according to the first aspect.

In addition to the one or more ethylenically unsaturated, free-radical polymerizable compounds and photoinitiator package according to the first aspect, the photopolymerizable composition may comprise further components, as would be well-understood by the person skilled in the art.

Suitable further components include photosensitizers, further photoinitiators, pigments, binders, and conventional additives.

As such, the photopolymerizable composition comprises, more preferably consists of:
a) an amount in the range from 30 to 99.0 wt.-%, more preferably in the range from 50 to 95.0 wt.-%, most preferably in the range from 70 to 90 wt.-%, relative to the total weight of the photopolymerizable composition, of the one or more ethylenically unsaturated, free-radical polymerizable compounds;
b) an amount in the range from 0.5 to 50 wt.-%, more preferably in the range from 0.8 to 40 wt.-%, most preferably in the range from 1.0 to 30 wt.-%, relative to the total weight of the photopolymerizable composition, of the photoinitiator package according to the first aspect;
c) optionally, an amount in the range from 0.5 to 30 wt.-%, more preferably in the range from 0.8 to 20 wt.-%, most preferably in the range from 1.0 to 15 wt.-% of one or more further photoinitiators, one or more photosensitizers and/or one or more co-initiators;
d) optionally, an amount in the range from 0.1 to 30 wt.-%, more preferably in the range from 1.0 to 25 wt.-%, most preferably in the range from 10 to 20 wt.-%, relative to the total weight of the photopolymerizable composition, of one or more pigments;
e) optionally, an amount in the range from 5.0 to 60 wt.-%, more preferably in the range from 8.0 to 50 wt.-%, most preferably in the range from 10 to 40 wt.-%, relative to the total weight of the photopolymerizable composition, of one or more binders; and
f) optionally, an amount in the range from 0.01 to 10 wt.-%, more preferably in the range from 0.01 to 8.0 wt.-%, most preferably in the range from 0.01 to 5.0 wt.-%, relative to the total weight of the photopolymerizable composition, of one or more additives.

In addition, the photopolymerizable composition may be formulated in compositions further comprising water and/or solvents, such as organic solvents.

It is preferred that no further photoinitiators, photosensitizers or co-initiators are present, beyond those forming part of the photoinitiator package. In other words, all components that contribute to the photopolymerization properties of the photoinitiator are preferably subsumed within the photoinitiator package, as defined above and below.

The choice of the one or more ethylenically unsaturated, free-radical polymerizable compounds is not particularly limited. Said compounds can contain one or more olefinic double bonds. They can be low-molecular weight (monomeric) or high-molecular weight (oligomeric) compounds.

Examples of suitable low molecular weight polymerizable compounds (monomeric compounds) having one double bond are alkyl or hydroxyalkyl acrylates or methacrylates, such as methyl-, ethyl-, butyl-, 2-ethylhexyl-,2-hydroxyethyl- or isobornyl-acrylate; and methyl or ethyl methacrylate. Further examples 5 are resins modified with silicon or fluorine, e.g. silicone acrylates. Further examples of these polymerizable compounds are acrylonitrile, acrylamide, methacrylamide, N-substituted (meth)acrylamides, styrene, alkylstyrenes and halogeno styrenes, vinyl esters such as vinyl acetate, vinyl ethers such as iso-butyl vinyl ether, N-vinylpyrrolidone, vinyl chloride or vinylidene chloride.

Examples of polymerizable compounds having more than one double bond are the ethylene glycol diacrylate, propylene glycol diacrylate, neopentyl glycol diacrylate, hexamethylene glycol diacrylate, bisphenol A diacrylate, 4,4'-bis-(2-acryloyloxyethoxy)-diphenylpropane, trimethylolpropane triacrylate, pentaerythritol triacrylate or tetraacrylate, vinyl acrylate, divinyl benzene, divinyl succinate, diallyl phthalate, triallyl phosphate, triallyl isocyanurate or tris-(2-acryloylethyl) isocyanurate.

Examples of high-molecular weight (oligomeric) polyunsaturated compounds are acrylated epoxy resins, acrylated or vinyl-ether- or epoxy-group-containing polyesters, acrylated polyurethanes or acrylated polyethers.

Further examples of unsaturated oligomers are unsaturated polyester resins which are usually prepared from maleic acid, phthalic acid and one or more diols and which have molecular weights of from about 500 Da to 3,000 Da. Such unsaturated oligomers can also be referred to as prepolymers.

Examples of polymerizable compounds which are particularly suitable for the implementation of the present invention, are esters of ethylenically unsaturated carboxylic acids and polyols or polyepoxides, and polymers containing ethylenically unsaturated groups in the chain or in side groups, e.g. unsaturated polyesters, polyamides and polyurethanes and copolymers thereof, alkyl resins, polybutadiene and butadiene copolymers, polyisoprene and isoprene copolymers, polymers and copolymers having (meth)acrylic groups in side chains, as well as mixtures thereof.

Illustrative examples of unsaturated carboxylic acids or anhydrides, useful for the preparation of the above esters, are acrylic acid, methacrylic acid, maleic anhydride, crotonic acid, itaconic acid, cinnamic acid and unsaturated fatty acids such as linolenic acid and oleic acid. Acrylic and methacrylic acid are preferred.

Examples of polyols, which can also be esterified, are aromatic and aliphatic and cycloaliphatic polyols, preferably aliphatic and cycloaliphatic polyols. Aromatic polyols are, for example, hydroquinone, 4,4'-dihydroxydiphenyl, 2,2-di(4-hydroxyphenyl) propane, as well as novolaks and resoles.

Polyepoxides, which can be esterified, include those based on the said polyols, especially the reaction products between aromatic polyols and epichlorohydrin. Also suitable as polyols are polymers and copolymers that contain hydroxyl groups in the polymer chain or in side groups, for example polyvinyl alcohol and copolymers thereof or polymethacrylic acid hydroxyalkyl esters or copolymers thereof. Further suitable polyols are oligoesters carrying hydroxyl terminal groups.

Examples of aliphatic and cycloaliphatic polyols include alkylenediols containing preferably from 2 to 12 carbon atoms, such as ethylene glycol, 1,2- or 1,3-propanediol, 1,2-, 1,3- or 1,4-butanediol, pentanediol, hexanediol, octanediol, dodecanediol, diethylene glycol, triethylene glycol, polyethylene glycols having molecular weights of preferably from 200 Da to 1,500 Da, 1,3-cyclopentanediol, 1,2-, 1,3- or 1,4-cyclohexanediol, 1,4-dihydroxymethyl cyclohexane, glycerol, tris(β-hydroxy-ethyl)amine, trimethylolethane, trimethylolpropane, pentaerythritol, dipentaerythritol and sorbitol.

Further suitable ethylenically unsaturated compounds are unsaturated polyamides obtained from unsaturated carboxylic acids and aromatic, aliphatic and cycloaliphatic polyamines having preferably from 2 to 6, preferably from 2 to 4, amino groups. Examples of such polyamines are: ethylenediamine, 1,2- or 1,3-propylenediamine, 1,2-, 1,3- or 1,4-butylenediamine, 1,5-pentylenediamine, 1,6-hexylenediamine, octylenediamine, dodecylene diamine, 1,4-diaminocyclohexane, isophoronediamine, phenylene diamine, bisphenylenediamine, di-(β -aminoethyl) ether, diethylene triamine, triethylenetetramine and di(β -aminoethoxy)- and di(β -aminopropoxy)ethane. Other suitable polyamines are polymers and copolymers which may contain additional amino groups in the side chain and oligoamides containing amino end groups.

Specific examples of such unsaturated polyamides are methylenebisacrylamide, 1,6-hexamethylene bisacrylamide, diethylenetriamine trismethacrylamide, bis(methacrylamidopropoxy) ethane and N-[(β -hydroxyethoxy)ethyl]-acrylamide.

Unsaturated polyurethanes are also suitable for the implementation of the present invention as polymerizable compounds, for example those derived from saturated or unsaturated diisocyanates and unsaturated or saturated diols.

Polybutadiene and polyisoprene and copolymers thereof may also be used.

Suitable polymerizable compounds include, for example, olefins, such as ethylene, propene, butene and hexene, (meth)acrylates, acrylonitrile, styrene and vinyl chloride. Polymers having unsaturated (meth)acrylate groups in the side chain can also be used as the one or more ethylenically unsaturated, free-radical polymerizable compounds. They may typically be reaction products of epoxy resins based on novolac with (meth)acrylic acid; homo- or copolymers of vinyl alcohol or hydroxyalkyl derivatives thereof that have been esterified with (meth)acrylic acid; and homo- and co-polymers of (meth)acrylates that have been esterified with hydroxyalkyl (meth)acrylates.

Examples of photosensitizers are those commonly used in the art, aromatic carbonyl compounds, e.g. benzophenones, thioxanthones, anthraquinones, and 3-acylcoumarin derivatives, terphenyls, styryl ketones, and 3- (aroylmethylene)-thiazolines, camphorquinones and also eosin, rhodamine and erythrosine dyes.

Examples of thioxanthones are thioxanthone, 2-isopropyl thioxanthone, 2-chloro thioxanthone, 2-dodecyl thioxanthone, 2,4-diethyl thioxanthone, 2,4-dimethyl thioxanthone, 1-methoxycarbonyl thioxanthone, 2-ethoxycarbonyl thioxanthone, 3-(2-methoxyethoxycarbonyl) thioxanthone, 4-butoxycarbonyl thioxanthone, 3-butoxycarbonyl-7-methyl thioxanthone, 1-cyano-3-chloro thioxanthone, 1-ethoxycarbonyl-3-chloro thioxanthone, 1-ethoxycarbonyl-3-ethoxy thioxanthone, 1-ethoxycarbonyl-3-amino thioxanthone, 1-ethoxycarbonyl-3-phenylsulfuryl thioxanthone, 3,4-di[2-(2-methoxyethoxy)ethoxycarbonyl] thioxanthone, 1-ethoxycarbonyl-3-(1-methyl-1-morpholinoethyl) thioxanthone, 2-methyl-6-dimethoxymethyl thioxanthone, 2-methyl-6-(1,1-dimethoxybenzyl) thioxanthone, 2-morpholinomethyl thioxanthone, 2-methyl-6-morpholinomethyl thioxanthone, N-allylthioxanthone-3,4-dicarboximide, N-octylthioxanthone-3,4-dicarboximide, N-(1,1,3,3-tetramethylbutyl)-thioxanthone-3,4-dicarboximide, 1-phenoxy thioxanthone, 6-ethoxycarbonyl-1-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthon-2-yloxy)-N,N,N-trimethyl-1-propanaminium chloride, or those described in the patent application PCT/EP2011/069514, such as n-dodecyl-7-methyl-thioxanthone-3-carboxylate and N,N-disobutyl-7-methyl-thioxanthone-3-carbamide. Also suitable are polymeric thioxanthone derivatives (e.g. Omnipol^{®} TX from IGM Resins B.V., Genopol^{®} TX-1 from Rahn A.G., Speedcure^{®} 7010 from Lambson Limited).

Example of benzophenones are benzophenone, 4-phenyl benzophenone, 4-methoxy benzophenone, 4,4'-dimethoxybenzophenone, 4,4'-dimethyl benzophenone, 4,4'-dichloro benzophenone, 4,4'-dimethylamino benzophenone, 4,4'-diethylamino benzophenone, 4-methyl benzophenone, 2,4,6-trimethyl benzophenone, 4-(4-methylthiophenyl) benzophenone, 3,3'-dimethyl-4-methoxy benzophenone, methyl 2-benzoyl benzoate, 4-(2-hydroxyethylthio) benzophenone, 4-(4-tolylthio) benzophenone, 4-benzoyl-N,N,N-trimethylbenzene methanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl) benzophenone, 4-benzoyl-N,N-dimethyl-N-[2-(1-oxo-2-propenyl)oxylethyl-benzene methanaminium chloride, or those described in US9938231 (e.g. Omnirad^{®} 991 from IGM Resins B.V.).

Also suitable are polymeric benzophenone derivatives (e.g. Omnipol^{®} BP, Omnipol^{®} 2702 and Omnipol^{®} 682 all from IGM Resins B.V., Genopol^{®} BP-2 from Rahn A.G. and Speedcure^{®} 7005 from Lambson Limited).

Examples of 3-acylcoumarin derivatives are 3-benzoyl coumarin, 3-benzoyl-7-methoxy coumarin, 3-benzoyl-5,7-di(propoxy) coumarin, 3-benzoyl-6,8-dichloro coumarin, 3-benzoyl-6-chloro coumarin, 3,3'-carbonyl-bis[5,7-di(propoxy) coumarin], 3,3'-carbonyl-bis(7-methoxy coumarin), 3,3'-carbonyl-bis(7-diethylamino coumarin), 3-isobutyroyl coumarin, 3-benzoyl-5,7-dimethoxy coumarin, 3-benzoyl-5,7-diethoxy coumarin, 3-benzoyl-5,7-dibutoxy coumarin, 3-benzoyl-5,7-di(methoxyethoxy) coumarin, 3-benzoyl-5,7-di(allyloxy) coumarin, 3-benzoyl-7-dimethylamino coumarin, 3-benzoyl-7-diethylamino coumarin, 3-isobutyroyl-1,7-dimethylamino coumarin, 5,7-dimethoxy-3-(1-naphthoyl) coumarin, 5,7-dimethoxy-3(1-naphthoyl)-coumarin, 3-benzoylbenzo [f]coumarin, 7-diethylamino-3-thienoyl coumarin, 3-(4-cyanobenzoyl)-5,7-dimethoxy coumarin, or those described in EP2909243 and WO2017216699.

Examples of 3-(aroylmethylene) thiazolines are 3-methy-1,2-benzoylmethylene-β-naphtho thiazoline, 3-methyl-2-benzoylmethylene-benzo thiazoline, 3-ethyl-2-propionylmethylene- β -naphtho thiazoline.

Examples of other aromatic carbonyl compounds are acetophenone, 3-methoxyacetophenone, 4-phenylacetophenone, benzil, such as that described in WO 2013/164394, 2-acetylnaphthalene, 2-naphthaldehyde, 9,10-anthraquinone, 9-fluorenone, dibenzosuberone, xanthone, 2,5-bis(4-diethylaminobenzylidene) cyclopentanone, α-(para-dimethylamino benzylidene), ketones, such as 2-(4-dimethylamino-benzylidene)-indan-1-one or 3-(4-dimethylaminophenyl)-1-indan-5-yl-propenone, 3-phenylthiophthalimide, N-methyl-3,5-di(ethylthio) phthalimide.

Particularly preferred are thioxanthones, and 3-acylcoumarins.

It was observed that the above photosensitizers increase the activity of the one or more bisacylphosphine oxide photoinitiators without shortening the shelf life of the compositions. Moreover, such compositions have the special advantage that an appropriate choice of the photosensitizer allows the spectral sensitivity of the photoinitiator package to be shifted to any desired wavelength region. The person skilled in the art is able to select the suitable photosensitizer to make the photoinitiator package work at any desired wavelength region.

Examples of other suitable photoinitiators are camphorquinone, benzophenone, benzophenone derivatives, acetophenone, acetophenone derivatives, dialkoxyacetophenones, α-hydroxyketones, α-aminoketones, 4-aroyl-1,3-dioxolanes, benzoin alkyl ethers and benzil ketals, e.g. benzil dimethyl ketal, ketosulfones, e.g 1-[4-[(4-benzoyl-phenyl)-thio]-phenyl]-2-methyl-2-[(4-methyl-phenyl)-sulfonyl]-propan-1-one (Esacure^{®} 1001, from IGM Resins B.V.), 3-ketocoumarins, for example as described in EP2909243 and WO2017216699, phenylglyoxylates and derivatives thereof, dimeric phenyl glyoxylates, peresters, e.g. benzophenonetetracarboxylic acid peresters, for example as described in EP 126 541, acylphosphine photoinitiators (which can be chosen among mono-acylphosphine oxides, bisacylphosphine oxides, tris-acylphosphine oxides and multifunctional mono- or bisacylphosphine oxides), halomethyltriazines, hexaaryl bisimidazole/coinitiator systems, e.g. ortho-chlorohexaphenylbisimidazole in combination with 2-mercaptobenzothiazole, ferrocenium compounds or titanocenes, for example dicyclopentadienyl-bis(2,6-difluoro-3-pyrrolo-phenyl)titanium, O-acyloxime ester photoinitiators.

Examples of α-hydroxyketones and α-aminoketones are 1-hydroxy cyclohexylphenyl ketone, 2-hydroxy-2-methyl-1-phenyl-propane-1-one, 1-[4-(2-hydroxyethoxy)phenyl]-2-hydroxy-2-methyl-1-propane-1-one, 2-hydroxy-1-{4-[4-(2-hydroxy-2-methyl-propionyl)-benzyl]phenyl}-2-ethyl-propane-1-one), 2-hydroxy-1-{4-[4-(2-hydroxy-2-methylpropionyl)-phenoxy]-phenyl}-2-methyl-propan-1-one, 2-methyl-1-(4-methylthiophenyl)-2-morpholinopropane-1-one), 2-benzyl-2-dimethylamino-1-(4-morpholinophenyl)-butane-1-one, and (2-(dimethylamino)-2-[(4-methylphenyl)methyl]-1-[4-(4-morpholinyl) phenyl]-1-butanone).

Examples of O-acyloxime ester photoinitiators are 1,2-octanedione, 1-[4-(phenylthio)phenyl]-2-(O-benzoyloxime), ethanone 1-[9-ethyl-6-(2-methylbenzoyl)-9H-carbazole-3-yl] 1-(O-acetyloxime) or those described in GB 2339571.

Examples of acylphosphine photoinitiators include, but are not limited to, bis(2,4,6-trimethylbenzoyl)phenylphosphine oxide, bis(2,6-dimethoxybenzoyl)-2,4,4-trimethylpentyl phosphine oxide, bis(2,4,6-trimethylbenzoyl)-(2,4-dipentyloxyphenyl), 2,4,6-trimethylbenzoyl-diphenyl phosphine oxide and ethyl (2,4,6-trimethylbenzoyl) phenylphosphinate, Phenyl(2,4,6-trimethylbenzoyl)phosphinic acid, glycerol ethoxylated trimester (Omnipol^{®} TP from IGM Resins B.V.).

Examples of the halomethyltriazines based photoinitiators are 2-[2-(4-methoxy-phenyl)-vinyl]-4,6-bis-trichloromethyl [1,3,5]triazine, 2-(4-methoxy-phenyl)-4,6-bis-trichloromethyl [1,3,5]triazine, 2-(3,4-dimethoxyphenyl)-4,6-bis-trichloromethyl [1,3,5]triazine, 2-methyl-4,6-bis-trichloromethyl [1,3,5] triazine.

Cationic photoinitiators can be also used as the further photoinitiators, when the photopolymerizable compositions according to the invention are used in hybrid systems (which in this connection mean mixtures of free- radically and cationically curing systems). Examples of suitable cationic photoinitiators are aromatic sulfonium, phosphonium or iodonium salts, as described e.g. in US 4,950,581, or cyclopentadienylarene-iron(II) complex salts, e.g. (η⁶-isopropylbenzene)(η⁵-cyclopentadienyl) iron(II) hexafluorophosphate or photolatent acids based on oximes, as described, for example, in GB 2 348 644, US4,450,598, US4,136,055, WO 00/10972 and WO 00/26219.

Any pigment known to the person skilled in the art may be used in the photopolymerizable composition.

Depending upon the intended use, both inorganic and organic pigments may be used. Such additives are well known to the person skilled in the art; some examples are carbon black, iron oxides, such as iron oxide yellow, iron oxide red, chromium yellow, chromium green, nickel titanium yellow, ultramarine blue, cobalt blue, bismuth vanadate, cadmium yellow and cadmium red. Examples of organic pigments are mono- or bis-azo pigments, and also metal complexes thereof, phthalocyanine pigments, polycyclic pigments, e.g. perylene, anthraquinone, thioindigo, quinacridone or triphenylmethane pigments, and also diketo-pyrrolo-pyrrole, isoindolinone, e.g. tetrachloroisoindolinone, isoindoline, dioxazine, benzimidazolone and quinophthalone pigments. The pigments may be used in the formulations individually or in admixture

The addition of binders is particularly advantageous when the ethylenically unsaturated, free-radical polymerizable compound(s) are liquid or viscous substances. The choice of binder is made in accordance with the field of use and the properties required therefor, such as developability in aqueous and organic solvent systems, adhesion to substrates and sensitivity to oxygen. Suitable binders are, for example, polymers having a weight average molecular weight (Mw) of approximately from 5,000 Da to 2,000,000 Da, preferably from 10,000 Da to 1,000,000 Da. Illustrative examples are: homo- and copolymers of acrylates and methacrylates, e.g. copolymers of methyl methacrylate/ethyl acrylate/methacrylic acid, poly(methacrylic acid alkyl esters), poly(acrylic acid alkyl esters); cellulose esters and ethers, such as cellulose acetate, cellulose acetate butyrate, methylcellulose, ethylcellulose, polyvinylbutyral, polyvinylformal, cyclised rubber, polyethers such as polyethylene oxide, polypropylene oxide, polytetrahydrofuran, polystyrene, polycarbonates, polyurethanes, chlorinated polyolefins, e.g. polyvinyl chloride, co-polymers of vinyl chloride/vinylidene chloride, co-polymers of vinylidene chloride with acrylonitrile, methyl methacrylate and vinyl acetate, polyvinyl acetate, co-poly (ethylene/vinyl acetate), polymers such as polycaprolactam and poly(hexamethylene adipamide), polyesters such as poly(ethylene glycol terephthalate) and poly(hexamethylene glycol succinate).

Suitable examples of co-initiators (also known as accelerators) are alcohols, thiols, thioethers, amines or ethers that have an available hydrogen, bonded to a carbon adjacent to the heteroatom, disulfides and phosphines, e.g. as described in EP 438 123 and GB 2 180 358. Suitable examples of amine accelerators/co-initiators include, but are not limited to, aliphatic, cycloaliphatic, aromatic, aryl-aliphatic, heterocyclic, oligomeric or polymeric amines. They can be primary, secondary or tertiary amines, for example butyl amine, dibutyl amine, tributyl amine, cyclohexyl amine, benzyldimethyl amine, di-cyclohexyl amine, N-phenyl glycine, triethyl amine, phenyl-diethanol amine, triethanolamine, piperidine, piperazine, morpholine, pyridine, quinoline, esters of dimethylamino benzoic acid, Michler's ketone (4,4'-bis-dimethyl aminobenzophenone) and derivatives thereof. As the amine accelerators/co-initiators, an amine-modified acrylate compound can be used; examples of such amine-modified acrylate include acrylates modified by reaction with a primary or secondary amine that are described in US 3,844,916, EP 280222, US 5,482,649 or US 5,734,002. Multifunctional amine and polymeric amine derivatives are also suitable as co-initiators some examples are Omnipol^{®} ASA from IGM Resins B.V., Genopol^{®} AB-2 from Rahn A.G., Speedcure^{®} 7040 from Lambson Limited or those described in US2013/0012611

The choice of additives is governed by the field of use in question and the properties desired for that field. Typical additives include thermal initiators, stabilizers, light stabilizers, fillers, colorants, antistatic agents, wetting agents, flow improvers, and adhesion enhancers.

For instance, especially in the case of pigmented compositions, the composition may also comprise, as additional additive, a thermal initiator, a compound that forms free radicals when heated, e.g. an azo compounds, such as 2,2'-azobis(4-methoxy-2,4-dimethylvaleronitrile), a triazene, diazosulfide, pentazadiene or a peroxy compound, for example a hydroperoxide or peroxycarbonate, e.g. tert-butyl hydroperoxide, as described e.g. in EP 245 639.

Suitable stabilizers are, for example, thermal inhibitors, such as hydroquinone, hydroquinone derivatives, p-methoxyphenol, β-naphthol or sterically hindered phenols, e.g. 2,6-di(tert-butyl)-p-cresol, which prevent premature polymerization. In order to increase dark storage stability it is possible to use, for example, copper compounds, such as copper naphthenate, stearate or octoate, phosphorus compounds, for example triphenylphosphine, tributylphosphine, triethyl phosphite, triphenyl phosphite or tribenzyl phosphite, quaternary ammonium compounds, e.g. tetramethylammonium chloride or trimethylbenzylammonium chloride, or hydroxylamine derivatives, e.g. N,N-diethylhydroxylamine. For the purpose of excluding atmospheric oxygen during polymerization it is possible to add paraffin or similar wax-like substances which, being insoluble in the polymer, migrate to the surface at the start of the polymerization forming a transparent surface layer that prevents air from entering.

It is also possible to add a light stabilizer, such as UV absorbers, e.g. hydroxyphenylbenzotriazole, hydroxyphenylbenzophenone, oxalic acid amide or hydroxyphenyl-s-triazine type. Such components can be used on their own or in the form of mixtures, with or without the use of sterically hindered amines (HALS).

All fallback positions and preferable embodiments of the photoinitiator package described above or below are applicable mutatis mutandis to the photopolymerizable composition according to the present aspect.

### Method

In a third aspect, the present invention is directed to a method for photocuring photopolymerizable compositions, coatings, adhesives and inks, said method comprising the following steps in the given order:
a) coating or printing the photopolymerizable composition according to the second aspect onto a substrate, and
b) photopolymerizing said coated or printed composition with a light source on said substrate.

Preferably the light source operates in the near-UV or visible range of the EM-spectrum.

All fallback positions and preferable embodiments of the photoinitiator package and the photopolymerizable composition described above or below are applicable mutatis mutandis to the method for photocuring photopolymerizable compositions, coatings, adhesives and inks according to the present aspect.

### Use

In a final aspect, the present invention is directed to a use of the photoinitiator package according to the first aspect in the production of printing inks, screen-printing inks, gravure printing inks, solder masks, etch offset-printing inks, flexographic- printing inks, gravure printing inks, inkjet inks, resist material, insulators, encapsulants, image-recording material, solder mask, passivation layer, protective coating, 3D-printing objects and molds, holographic applications, optical fiber coating, waveguide and lens, overprint varnish, wood, vinyl, metal and plastic coatings.

All fallback positions and preferable embodiments of the photoinitiator package described above or below are applicable mutatis mutandis to the use according to the present aspect.

### EXAMPLES

### A. Determination methods

**Through-cure measurement:** The through-cure test is a measurement of the complete ink cure obtained at a defined speed and checked by "thumb twist pressure test". It is evaluated as follows: the ink is homogenized with a mechanical stirrer for 1 hour at 50°C and applied onto a white cardboard at a thickness comprised between 1-1.5 microns using IGT repro-tester equipment.

The results of the through-cure measurement can be expressed as either the maximum speed (m/min) at which no signs remain on the surface (wherein higher speed corresponds to higher reactivity) of by the minimum light dose (mJ/cm²) at which no signs remain on the surface (wherein lower light does corresponds to higher reactivity).

**Surface Test:** the surface test is a measurement of the complete ink surface cure obtained per number of passages under the lamp (at a given power) at 100 m/min and checked by pressing the thumb on the surface. If no signs remain the surface is completely cure. The fewer passages required, the better the surface cure.

### Viscosity

The viscosity is measured after conditioning the sample at 20 °C for at least 24h by using a Brookfield RV DV-I + viscosimeter. From the display of the instrument the spindle and the rpm are selected (the values reported below are measured at 20 rpm), then the measurement is started and the value of the viscosity is recorded as soon as it is stabilized. Lower values correspond to less viscous fluids. As would be known by the skilled person, different spindles are required for different viscosity ranges, with CE5 of the present application measured using spindle 6 and IE1 of the present application measured using spindle 5. The difference in these spindle sizes is factored into the calculation of the final Brookfield viscosity value, thus the final value is not spindle-dependent.

### B. Experimental

### 1. Materials used

The following commercially available compounds were used in the preparation of the reference, inventive and comparative photoinitiator packages:

| | |
|---|---|
| **PI-1:** | bis(2,4,6-trimethylbenzoyl) octylphosphine oxide, prepared as in US 5534559 A. |
| **PI-2:** | ethyl(2,4,6-trimethylbenzoyl)-phenyl phosphine oxide, CAS #: 84434-11-7, commercially available as Omnirad TPO-L from IGM Group B. V. (NL). |
| **PI-3:** | bis(2,4,6-trimethylbenzoyl) phenylphosphine oxide, CAS #: 162881-26-7, commercially available as Omnirad 819 from IGM Group B. V. (NL). |
| **S:** | 7-diethylamino-4-methylcoumarin, CAS #: 91-44-1, commercially available as Coumarin 1 from Merck KGaA (DE). |

### 2. Formulations (photoinitiator packages)

Various inventive and comparative photoinitiator packages were created according to the recipes in Table 1:

**Table 1 Photoinitiator package recipes**

| | | **CE1** | **CE2** | **CE3** | **CE4** | **CE5** | **IE1** |
|---|---|---|---|---|---|---|---|
| **PI-1** | [wt.-%] | 100 | | | | 80 | 20 |
| **PI-2** | [wt.-%] | | 100 | | 90 | | 50 |
| **PI-3** | [wt.-%] | | | 100 | 10 | | 10 |
| **S** | [wt.-%] | | | | | 20 | 20 |

The photoinitiator packages were prepared by combining photoinitiator(s) and sensitizer (if present) at the concentration indicated in Table 1 at room temperature. The formulations were stirred at 60 °C for 2 hours.

CE1 is a highly viscous liquid at room temperature.

CE2 is a liquid at room temperature.

CE3 is a solid at room temperature.

CE4 is a liquid blend at room temperature.

CE5 is a liquid blend at room temperature, having a viscosity of 19400 cP.

IE1 is a liquid blend at room temperature, having a viscosity of 8120 cP.

### 3. Through-cure and surface cure evaluation

The following lamps were used in Tables 2a to 2d:

| | |
|---|---|
| Lamp 1: | a UV LED lamp with a wavelength of 395 nm and an intensity of 16 W/cm². |
| Lamp 2: | a UV LED lamp with a wavelength of 395 nm and an intensity of 8 W/cm². |
| Lamp 3: | a UV LED lamp with a wavelength of 395 nm and an intensity of 4 W/cm². |
| Lamp 4: | a UV LED lamp with a wavelength of 385 nm and an intensity of 16 W/cm². |
| Lamp 5: | a UV LED lamp with a wavelength of 385 nm and an intensity of 8 W/cm². |
| Lamp 6: | a UV LED lamp with a wavelength of 365 nm and an intensity of 16 W/cm². |
| Lamp 7: | a UV LED lamp with a wavelength of 365 nm and an intensity of 8 W/cm². |
| Lamp 8: | a UV LED lamp with a wavelength of 365 nm and an intensity of 4 W/cm². |

The inventive and comparative photoinitiator packages were evaluated for their through-cure ability. The relevant photoinitiator package was added to a flexo ink in an amount of 5 wt%, and the resultant composition was photocured using different light sources (with the values in Table 2a corresponding to the maximum through cure speed in m/min). Data presented as Lamp 1B and Lamp 7B were determined using black flexo ink, whilst data presented as Lamp 3C and Lamp 8C were determined using cyan flexo ink:

**Table 2a: Performance of the comparative and inventive photoinitiator packages in through curing of flexo ink**

| | **Lamp 1B** | **Lamp 7B** | **Lamp 3C** | **Lamp 8C** |
|---|---|---|---|---|
| **CE1** | <10 | <10 | 50 | 85 |
| **CE2** | <10 | <10 | 40 | 75 |
| **CE3** | 70 | 30 | 75 | >100 |
| **CE4** | <10 | <10 | 38 | 75 |
| **CE5** | 100 | >100 | >100 | >100 |
| **IE1** | 100 | >100 | >100 | >100 |

| | | | | |
|---|---|---|---|---|
| * <10 means that no through-cure is measured, whilst >100 means that the surface is overcured, i.e. the maximum speed would be above 100 m/min; however, the maximum belt speed is 100 m/min, thus higher belt speeds cannot be tested. | | | | |

As can be seen from the data in Table 2a, the two photoinitiator packages containing the sensitizer (CE5 and IE1) were considerably more effective at effecting a through cure of both black and cyan flexo inks. Inventive example IE1 has the added benefit of being considerably easier to handle and incorporate in formulations due to its lower viscosity.

The inventive and comparative photoinitiator packages were also evaluated for their performance with offset inks.

The data presented as "Lamps 1a, 4a and 6a" is a surface cure test using lamps 1, 3, and 5, respectively, carried out according to the procedure for surface curing given in the determination methods with the values given in the tables corresponding to the minimum number of passes needed to achieve a completely cured surface. The fewer passes required, the better the curing ability of the photoinitiator package.

The data presented as "Lamps 1b, 2b, 4b, 5b, and 6b" is a through cure test using lamps 1, 2, 4, 5, and 6 respectively, carried out according to the procedure for through curing given in the determination methods, with the values given in the tables corresponding to the maximum through-cure speed in m/min. The higher the speed, the better the curing ability of the photoinitiator package.

**Table 2b: Performance of the comparative and inventive photoinitiator packages in through and surface curing of yellow offset ink**

| | **Lamp 1a** | **Lamp 1b** | **Lamp 2b** | **Lamp 4a** | **Lamp 4b** | **Lamp 5b** |
|---|---|---|---|---|---|---|
| **CE3** | 1 | 90 | 30 | 1 | 100 | 65 |
| **CE5** | 1 | 95 | 32 | 1 | 100 | 65 |
| **IE1** | 1 | 95 | 35 | 1 | 100 | 70 |

**Table 2c: Performance of the comparative and inventive photoinitiator packages in through and surface curing of magenta offset ink**

| | **Lamp 1a** | **Lamp 1b** | **Lamp 4a** | **Lamp 4b** |
|---|---|---|---|---|
| **CE5** | 2 | 87 | 2 | 95 |
| **IE1** | 2 | 90 | 1.5 | 98 |

**Table 2d: Performance of the comparative and inventive photoinitiator packages in through and surface curing of cyan offset ink**

| | **Lamp 1a** | **Lamp 1b** | **Lamp 4a** | **Lamp 4b** | **Lamp 6a** | **Lamp 6b** |
|---|---|---|---|---|---|---|
| **CE5** | 3 | 80 | 3 | 95 | 2 | 68 |
| **IE1** | 2 | 80 | 2 | 95 | 2 | 75 |

As can be seen from Tables 2b to 2d, the inventive ink IE1 has a superior balance of surface curing and through curing, relative to CE3 and CE5.

## Claims

1. A photoinitiator package comprising, more preferably consisting of:
a) one or more bisacylphosphine oxide photoinitiators, each having a structure according to formula (I): 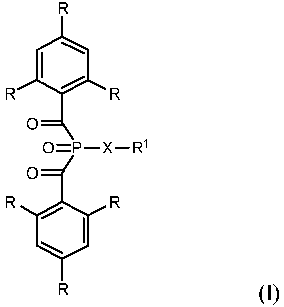
wherein each instance of R is independently selected from the group consisting of C₁-C₄ alkyl;
wherein X is selected from the group consisting of direct single bond, O, S, NR³, -CH₂CO₂-, and -CH₂CH₂CO₂-;
wherein R¹ is selected from the group consisting of C₁-C₄₀ alkyl and interrupted C₂-C₄₀ alkyl being interrupted by one or more O or C₃-C₈ cycloalkylene, wherein said C₁-C₄₀ alkyl or interrupted C₂-C₄₀ alkyl may be unsubstituted or substituted by one or more groups selected from OH and R²;
wherein R² is 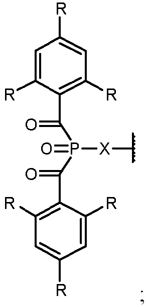 wherein R³ is selected from the group consisting of hydrogen, (CO)R⁴, phenyl, C₁-C₁₂ alkyl, C₂-C₁₂ alkyl being interrupted by one or more O, wherein said C₁-C₁₂ alkyl or interrupted C₂-C₁₂ alkyl is unsubstituted or substituted by one or more C₃-C₇ cycloalkyl, OH or by NCO, C₃-C₁₂ cycloalkyl which is unsubstituted or substituted by one or more C₁-C₄ alkyl, C₁-C₄ alkoxy, OH or by NCO; and wherein R⁴ is selected from the group consisting of C₁-C₁₂ alkyl or C₂-C₁₂ alkyl which is interrupted by one or more O, wherein said C₁-C₁₂ alkyl or interrupted C₂-C₁₂ alkyl is unsubstituted or substituted by one or more C₃-C₇-cycloalkyl, OH, NCO or by phenyl which is substituted by NCO; C₃-C₁₂ cycloalkyl; C₂-C₁₀ alkenyl which is unsubstituted or substituted by one or more C₁-C₄ alkyl, OH or C₁-C₄ alkoxy; C₆-C₁₄ aryl which is unsubstituted or substituted by C₁-C₁₂ alkyl, C₁-C₁₂ alkoxy, NCO or by NCO-substituted C₁-C₁₂ alkyl.
b) one or more further acylphosphine oxide photoinitiators having a structure not according to formula (I);
c) one or more optical brightener sensitizers; and
d) optionally one or more amines,
wherein the photoinitiator package is a blend that is liquid at 25 °C and standard pressure.

2. The photoinitiator package according to claim 1, wherein each instance of R is Me.

3. The photoinitiator package according to either claim 1 or claim 2, wherein X is selected from the group consisting of direct single bond, O, -CH₂CO₂-, and -CH₂CH₂CO₂-, more preferably is selected from the group consisting of direct single bond -CH₂CO₂-, and -CH₂CH₂CO₂-, most preferably is a direct single bond.

4. The photoinitiator package according to any one of the preceding claims, wherein R¹ is selected from the group consisting of C₁-C₂₀ alkyl, -(CH₂CH₂O-)ₙCH₃, and -(CH₂CH₂O-)ₙH, wherein n is an integer in the range from 1 to 20, more preferably R¹ is C₁-C₂₀ alkyl.

5. The photoinitiator package according to any one of claims 1 to 4, wherein R¹ has a structure according to formula (II): 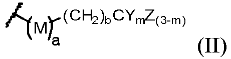
wherein each instance of M is independently selected from (CH₂CH₂O) and (CH₂CH(CH₃)O);
wherein each instance of Y is independently selected from hydrogen and C₁-C₄ alkyl;
wherein each instance of Z has the structure CH₂(M¹)_{c}R²;
wherein each instance of M¹ is independently selected from (OCH₂CH₂) and (OCH(CH₃)CH₂)
wherein a is an integer in the range from 0 to 15;
wherein b is an integer in the range from 0 to 6;
wherein each instance of c is independently an integer in the range from 0 to 15; wherein m is an integer in the range from 0 to 2; and
wherein each instance of X is independently selected from the group consisting of -CH₂CO₂-, and -CH₂CH₂CO₂-.

6. The photoinitiator package according to any one of the preceding claims, wherein at least one of the one or more optical brightener sensitizers has a structure according to formula (III): 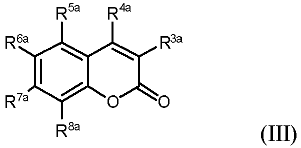
wherein R^{3a} is selected from the group consisting of hydrogen, C₁-C₁₀ alkyl, C₆-C₁₄ aryl, and C₆-C₁₄ heteroaryl,
R^{4a} is selected from the group consisting of hydrogen, C₁-C₁₀ alkyl, wherein said C₁-C₁₀ alkyl may be substituted by one or more fluorine atoms, and OR^{1a}, and
each of R^{5a} to R^{8a} is independently selected from the group consisting of hydrogen, halogen, C₁-C₁₀ alkyl, OR^{1a}, and NR^{2a}₂;
wherein each instance of R^{1a} is independently selected from hydrogen, C₁-C₁₀ alkyl and C₆-C₁₄ aryl, and each instance of R^{2a} is independently selected from hydrogen, C₁-C₁₀ alkyl and C₆-C₁₄ aryl, wherein each instance of R^{1a} to R^{8a} may optionally be joined to one or more further instances of R^{1a} to R^{8a} to form one or more 5-membered or 6-membered rings.

7. The photoinitiator package according to any one of the preceding claims, wherein at least one of the one or more optical brightener sensitizers has a structure according to formula (IV): 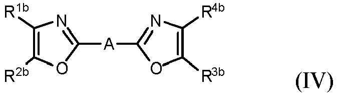
wherein each of R^{1b} to R^{4b} is independently selected from the group consisting of hydrogen, C₁-C₁₀ alkyl and C₆-C₁₄ aryl, wherein R^{1b} and R^{2b} may be joined to form a 6-membered saturated or unsaturated ring, which may be substituted by one or more substituents selected from the group consisting of hydrogen, C₁-C₁₀ alkyl and C₆-C₁₄ aryl, and wherein R^{3b} and R^{4b} may be joined to form a 6-membered ring, which may be substituted by one or more substituents selected from the group consisting of hydrogen, C₁-C₁₀ alkyl and C₆-C₁₄ aryl; and
wherein A represents a linking group represented by any of the following formulas (V) to (IX): 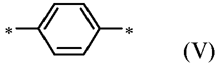 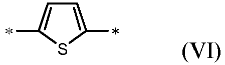 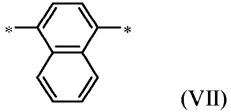 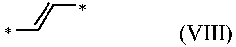 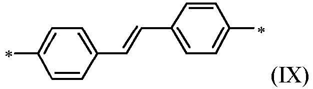
wherein each * represents a bonding position of A in each formula

8. The photoinitiator package according to claim 7, wherein at least one of the one or more optical brightener sensitizers has a structure according to formula (X): 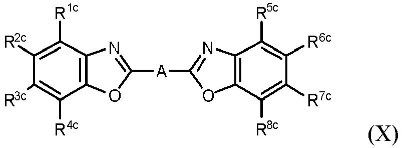 wherein each of R^{1c} to R^{8c} is independently selected from the group consisting of hydrogen, C₁-C₁₀ alkyl and C₆-C₁₄ aryl.

9. The photoinitiator package according to any one of the preceding claims, wherein the one or more one or more further acylphosphine oxide photoinitiators having a structure not according to formula (I) comprises one or more monoacylphosphine photoinitiators and one or more bisacylphosphine oxide photoinitiators having a structure not according to formula (I).

10. The photoinitiator package according to any one of the preceding claims, wherein the photoinitiator package comprises, more preferably consists of:
a) an amount in the range from 15 to 40 wt.-%, more preferably in the range from 18 to 35 wt.-%, most preferably in the range from 19 to 30 wt.-%, relative to the total weight of the photoinitiator package, of the one or more bisacylphosphine oxide photoinitiators having a structure according to formula (I);
b) an amount in the range from 30 to 75 wt.-%, more preferably in the range from 40 to 70 wt.-%, most preferably in the range from 50 to 60 wt.-%, relative to the total weight of the photoinitiator package, of the one or more further acylphosphine oxide photoinitiators having a structure not according to formula (I);
c) an amount in the range from 5 to 30 wt.-%, more preferably in the range from 10 to 25 wt.-%, most preferably in the range from 15 to 22 wt.-%, relative to the total weight of the photoinitiator package, of the one or more optical brightener sensitizers; and
d) optionally, an amount in the range from 1 to 30 wt.-%, more preferably in the range from 3 to 25 wt.-%, most preferably in the range from 5 to 20 wt.-%, relative to the total weight of the photoinitiator package, of one or more amines.

11. A photopolymerizable composition, comprising:
a) one or more ethylenically unsaturated, free-radical polymerizable compounds;
b) the photoinitiator package according to any one of claims 1 to 10.

12. The photopolymerizable composition according to claim 11, wherein the photopolymerizable composition comprises:
a) an amount in the range from 30 to 99.0 wt.-%, more preferably in the range from 50 to 95.0 wt.-%, most preferably in the range from 70 to 90 wt.-%, relative to the total weight of the photopolymerizable composition, of the one or more ethylenically unsaturated, free-radical polymerizable compounds;
b) an amount in the range from 0.5 to 50 wt.-%, more preferably in the range from 0.8 to 40 wt.-%, most preferably in the range from 1.0 to 30 wt.-%, relative to the total weight of the photopolymerizable composition, of the photoinitiator package according to any one of claims 1 to 10.

13. The photopolymerizable composition according to claim 11 or claim 12, wherein the photopolymerizable composition further comprises one or more, of the following components:
c) an amount in the range from 0.5 to 30 wt.-%, more preferably in the range from 0.8 to 20 wt.-%, most preferably in the range from 1.0 to 15 wt.-% of one or more further photoinitiators, one or more photosensitizers and/or one or more co-initiators;
d) an amount in the range from 0.1 to 30 wt.-%, more preferably in the range from 1.0 to 25 wt.-%, most preferably in the range from 10 to 20 wt.-%, relative to the total weight of the photopolymerizable composition, of one or more pigments;
e) an amount in the range from 5.0 to 60 wt.-%, more preferably in the range from 8.0 to 50 wt.-%, most preferably in the range from 10 to 40 wt.-%, relative to the total weight of the photopolymerizable composition, of one or more binders; and
f) an amount in the range from 0.01 to 10 wt.-%, more preferably in the range from 0.01 to 8.0 wt.-%, most preferably in the range from 0.01 to 5.0 wt.-%, relative to the total weight of the photopolymerizable composition, of one or more additives.

14. A method for photocuring photopolymerizable compositions, coatings, adhesives and inks, said method comprising the following steps in the given order:
a) coating or printing the photopolymerizable composition according to any one of claims 11 to 13 onto a substrate, and
b) photopolymerizing said coated or printed composition with a light source on said substrate.

15. A use of the photoinitiator package according to any one of claims 1 to 10 in the production of printing inks, screen-printing inks, gravure printing inks, solder masks, etch offset-printing inks, flexographic- printing inks, gravure printing inks, ink jet inks, resist material, insulators, encapsulants, image-recording material, solder mask, passivation layer, protective coating, 3D-printing objects and molds, holographic applications, optical fiber coating, waveguide and lens, overprint varnish, wood, vinyl, metal and plastic coatings.

## Patentansprüche

1. Photoinitiatorpaket umfassend, vorzugsweise bestehend aus:
a) einem oder mehreren Bisacylphosphinoxid-Photoinitiatoren, die jeweils eine Struktur gemäß Formel (I) aufweisen: 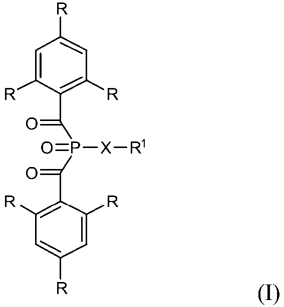
wobei jedes R unabhängig voneinander aus der Gruppe ausgewählt ist, die aus C₁-C₄-Alkyl besteht;
wobei X ausgewählt ist aus der Gruppe bestehend aus einer direkten Einfachbindung, O, S, NR³,
-CH₂CO₂- und -CH₂CH₂CO₂-;
wobei R¹ aus der Gruppe ausgewählt ist, bestehend aus C₁-C₄₀ Alkyl und unterbrochenem C₂-C₄₀ Alkyl, das durch ein oder mehrere O oder C₃-C₈-Cycloalkylen unterbrochen ist, wobei C₁-C₄₀-Alkyl oder unterbrochene C₂-C₄₀-Alkyl unsubstituiert oder durch eine oder mehrere Gruppen ausgewählt aus OH und R² substituiert sein kann;
wobei R² 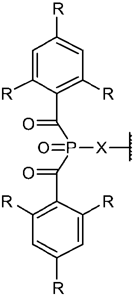 ist;
wobei R³ ausgewählt ist aus der Gruppe bestehend aus Wasserstoff, (CO)R⁴, Phenyl, C₁-C₁₂ Alkyl, C₂-C₁₂ Alkyl, das durch ein oder mehrere O unterbrochen ist, wobei C₁-C₁₂ Alkyl oder unterbrochenes C₂-C₁₂ Alkyl unsubstituiert oder durch ein oder mehrere weitere C₃-C₇ Cycloalkyl, OH oder durch NCO substituiert sind, C₃-C₁₂ Cycloalkyl, das unsubstituiert oder durch ein oder mehrere C₁-C₄ Alkyl, C₁-C₄ Alkoxy, OH oder durch NCO substituiert ist; und wobei R⁴ ausgewählt ist aus der Gruppe bestehend aus C₁-C₁₂ Alkyl oder C₂-C₁₂ Alkyl, das durch ein oder mehrere O unterbrochen ist, wobei C₁-C₁₂-Alkyl oder unterbrochenes C₂-C₁₂-Alkyl unsubstituiert oder durch ein oder mehrere C₃-C₇-Cycloalkyl, OH, NCO oder durch Phenyl, welches durch NCO substituiert ist, substituiert ist; C₃-C₁₂-Cycloalkyl; C₂-C₁₀-Alkenyl, das unsubstituiert oder durch ein oder mehrere C₁-C₄-Alkyl, OH oder C₁-C₄-Alkoxy substituiert ist; C₆-C₁₄ Aryl, das unsubstituiert oder durch C₁-C₁₂ Alkyl, C₁-C₁₂ Alkoxy, NCO oder durch NCO-substituiertes C₁-C₁₂ Alkyl substituiert ist.
b) einem oder mehreren weiteren Acylphosphinoxid-Photoinitiatoren mit einer Struktur, die nicht der Formel (I) entspricht;
c) einem oder mehreren optischen Aufhellersensibilisatoren; und
d) optional ein oder mehrere Amine,
wobei das Photoinitiatorpaket eine Mischung ist, die bei 25 °C und Normaldruck flüssig ist.

2. Das Photoinitiatorpaket gemäß Anspruch 1, wobei jedes R für Me steht.

3. Das Photoinitiatorpaket gemäß Anspruch 1 oder Anspruch 2, wobei X aus der Gruppe ausgewählt ist, die aus einer direkten Einfachbindung, O, -CH₂CO₂- und -CH₂CH₂CO₂- besteht, vorzugsweise aus der Gruppe ausgewählt ist, die aus einer direkten Einfachbindung -CH₂CO₂- und -CH₂CH₂CO₂- besteht, und am meisten bevorzugt eine direkte Einfachbindung ist.

4. Das Photoinitiatorpaket gemäß einem der vorstehenden Ansprüche, wobei R¹ aus der Gruppe ausgewählt ist, die aus C₁-C₂₀-Alkyl, -(CH₂CH₂O-)ₙCH₃ und -(CH₂CH₂O-)ₙH besteht, wobei n eine ganze Zahl im Bereich von 1 bis 20 ist, wobei R¹ vorzugsweise C₁-C₂₀-Alkyl ist.

5. Das Photoinitiatorpaket gemäß einem der Ansprüche 1 bis 4, wobei R¹ eine Struktur gemäß Formel (II) aufweist: 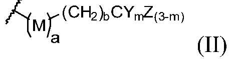
wobei jedes M unabhängig voneinander aus (CH₂CH₂O) und (CH₂CH(CH₃)O) ausgewählt ist;
wobei jedes Y unabhängig voneinander aus Wasserstoff und C₁-C₄ Alkyl ausgewählt ist;
wobei jedes Z die Struktur CH₂(M¹)_{c}R² aufweist;
wobei jedes M¹ unabhängig voneinander aus (OCH₂CH₂) und (OCH(CH₃)CH₂) ausgewählt ist
wobei a eine ganze Zahl im Bereich von 0 bis 15 ist;
wobei b eine ganze Zahl im Bereich von 0 bis 6 ist;
wobei jedes c unabhängig eine ganze Zahl im Bereich von 0 bis 15 ist;
wobei m eine ganze Zahl im Bereich von 0 bis 2 ist; und
wobei jedes Vorkommen von X unabhängig aus der Gruppe ausgewählt ist, die aus -CH₂CO₂- und -CH₂CH₂CO₂- besteht.

6. Das Photoinitiatorpaket gemäß einem der vorstehenden Ansprüche, wobei mindestens einer der einen oder mehreren optischen Aufheller-Sensibilisatoren eine Struktur gemäß Formel (III) aufweist: 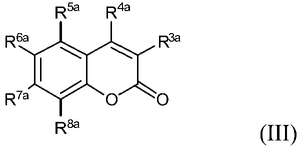
wobei R^{3a} aus der Gruppe ausgewählt ist, die aus Wasserstoff, C₁-C₁₀-Alkyl, C₆-C₁₄-Aryl und C₆-C₁₄-Heteroaryl besteht,
R^{4a} aus der Gruppe ausgewählt ist, die aus Wasserstoff, C₁-C₁₀-Alkyl, wobei das C₁-C₁₀-Alkyl durch ein oder mehrere Fluoratome substituiert sein kann, und OR^{1a} besteht, und
jedes von R^{5a} bis R^{8a} unabhängig voneinander ausgewählt ist aus der Gruppe bestehend aus Wasserstoff, Halogen, C₁-C₁₀ Alkyl, OR^{1a} und NR^{2a}₂;
wobei jedes R^{1a} unabhängig voneinander aus Wasserstoff, C₁-C₁₀ Alkyl und C₆-C₁₄ Aryl ausgewählt ist und jedes R^{2a} unabhängig voneinander aus Wasserstoff, C₁-C₁₀ Alkyl und C₆-C₁₄-Aryl ausgewählt ist, wobei jedes R^{1a} bis R^{8a} optional mit einem oder mehreren weiteren R^{1a} bis R^{8a} verbunden sein kann, um einen oder mehrere 5-gliedrige oder 6-gliedrige Ringe zu bilden.

7. Das Photoinitiatorpaket gemäß einem der vorstehenden Ansprüche, wobei mindestens einer der einen oder mehreren optischen Aufheller-Sensibilisatoren eine Struktur gemäß Formel (IV) aufweist: 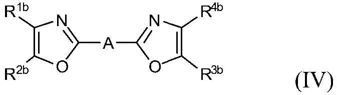
wobei jedes von R^{1b} bis R^{4b} unabhängig voneinander aus der Gruppe ausgewählt ist, die aus Wasserstoff, C₁-C₁₀-Alkyl und C₆-C₁₄-Aryl ausgewählt ist, wobei R^{1b} und R^{2b} miteinander verbunden sein können, um einen 6-gliedrigen gesättigten oder ungesättigten Ring zu bilden, der durch einen oder mehrere Substituenten substituiert sein kann, die aus der Gruppe ausgewählt sind, die aus Wasserstoff, C₁-C₁₀-Alkyl und C₆-C₁₄ Aryl ausgewählt sind, und wobei R^{3b} und R^{4b} miteinander verbunden sein können, um einen 6-gliedrigen Ring zu bilden, der durch einen oder mehrere Substituenten substituiert sein kann, die aus der Gruppe ausgewählt sind, die aus Wasserstoff, C₁-C₁₀ Alkyl und C₆-C₁₄ Aryl besteht; und
wobei A eine Verbindungsgruppe darstellt, die durch eine der folgenden Formeln (V) bis (IX) dargestellt wird: 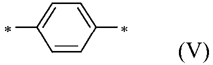 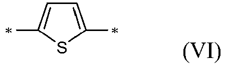 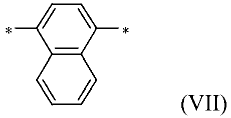 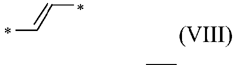 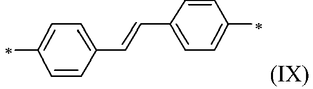
wobei jedes * eine Bindungsposition von A in jeder Formel darstellt

8. Das Photoinitiatorpaket gemäß Anspruch 7, wobei mindestens einer der einen oder mehreren optischen Aufheller-Sensibilisatoren eine Struktur gemäß Formel (X) aufweist: 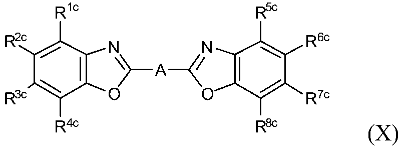 wobei jedes R^{1c} bis R^{8c} unabhängig voneinander aus der Gruppe ausgewählt ist, die aus Wasserstoff, C₁-C₁₀-Alkyl und C₆-C₁₄-Aryl besteht.

9. Das Photoinitiatorpaket gemäß einem der vorstehenden Ansprüche, wobei der eine oder die mehreren weiteren Acylphosphinoxid-Photoinitiatoren mit einer Struktur, die nicht der Formel (I) entspricht, einen oder mehrere Monoacylphosphin-Photoinitiatoren und einen oder mehrere Bisacylphosphinoxid-Photoinitiatoren mit einer Struktur, die nicht der Formel (I) entspricht, umfasst.

10. Das Photoinitiatorpaket gemäß einem der vorstehenden Ansprüche, wobei das Photoinitiatorpaket umfasst, vorzugsweise besteht aus:
a) eine Menge im Bereich von 15 bis 40 Gew.-%, vorzugsweise im Bereich von 18 bis 35 Gew.-%, am bevorzugtesten im Bereich von 19 bis 30 Gew.-%, bezogen auf das Gesamtgewicht des Photoinitiatorpakets, eines oder mehrerer Bisacylphosphinoxid-Photoinitiatoren mit einer Struktur gemäß Formel (I);
b) eine Menge im Bereich von 30 bis 75 Gew.-%, vorzugsweise im Bereich von 40 bis 70 Gew.-%, am bevorzugtesten im Bereich von 50 bis 60 Gew.-%, bezogen auf das Gesamtgewicht des Photoinitiatorpakets, eines oder mehrerer weiterer Acylphosphinoxid-Photoinitiatoren mit einer Struktur, die nicht der Formel (I) entspricht;
c) eine Menge im Bereich von 5 bis 30 Gew.-%, vorzugsweise im Bereich von 10 bis 25 Gew.-%, am bevorzugtesten im Bereich von 15 bis 22 Gew.-%, bezogen auf das Gesamtgewicht des Photoinitiatorpakets, eines oder mehrerer optischer Aufheller-Sensibilisatoren; und
d) optional eine Menge im Bereich von 1 bis 30 Gew.-%, vorzugsweise im Bereich von 3 bis 25 Gew.-%, am bevorzugtesten im Bereich von 5 bis 20 Gew.-%, bezogen auf das Gesamtgewicht des Photoinitiatorpakets, eines oder mehrerer Amine.

11. Photopolymerisierbare Zusammensetzung, umfassend:
a) eine oder mehrere ethylenisch ungesättigte, radikalisch polymerisierbare Verbindungen;
b) das Photoinitiatorpaket gemäß einem der Ansprüche 1 bis 10.

12. Die photopolymerisierbare Zusammensetzung gemäß Anspruch 11, wobei die photopolymerisierbare Zusammensetzung umfasst:
a) eine Menge im Bereich von 30 bis 99,0 Gew.-%, vorzugsweise im Bereich von 50 bis 95,0 Gew.-%, am bevorzugtesten im Bereich von 70 bis 90 Gew.-%, bezogen auf das Gesamtgewicht der photopolymerisierbaren Zusammensetzung, der einen oder mehreren ethylenisch ungesättigten, radikalisch polymerisierbaren Verbindungen;
b) eine Menge im Bereich von 0,5 bis 50 Gew.-%, vorzugsweise im Bereich von 0,8 bis 40 Gew.-%, am bevorzugtesten im Bereich von 1,0 bis 30 Gew.-%, bezogen auf das Gesamtgewicht der photopolymerisierbaren Zusammensetzung, des Photoinitiatorpakets gemäß einem der Ansprüche 1 bis 10.

13. Die photopolymerisierbare Zusammensetzung gemäß Anspruch 11 oder Anspruch 12, wobei die photopolymerisierbare Zusammensetzung ferner eine oder mehrere der folgenden Komponenten umfasst:
c) eine Menge im Bereich von 0,5 bis 30 Gew.-%, vorzugsweise im Bereich von 0,8 bis 20 Gew.-%, am bevorzugtesten im Bereich von 1,0 bis 15 Gew.-% eines oder mehrerer weiterer Photoinitiatoren, eines oder mehrerer Photosensibilisatoren und/oder eines oder mehrerer Co-Initiatoren;
d) eine Menge im Bereich von 0,1 bis 30 Gew.-%, vorzugsweise im Bereich von 1,0 bis 25 Gew.-%, am bevorzugtesten im Bereich von 10 bis 20 Gew.-%, bezogen auf das Gesamtgewicht der photopolymerisierbaren Zusammensetzung, eines oder mehrerer Pigmente;
e) eine Menge im Bereich von 5,0 bis 60 Gew.-%, vorzugsweise im Bereich von 8,0 bis 50 Gew.-%, am bevorzugtesten im Bereich von 10 bis 40 Gew.-%, bezogen auf das Gesamtgewicht der photopolymerisierbaren Zusammensetzung, eines oder mehrerer Bindemittel; und
f) eine Menge im Bereich von 0,01 bis 10 Gew.-%, vorzugsweise im Bereich von 0,01 bis 8,0 Gew.-%, am bevorzugtesten im Bereich von 0,01 bis 5,0 Gew.-%, bezogen auf das Gesamtgewicht der photopolymerisierbaren Zusammensetzung, eines oder mehrerer Additive.

14. Verfahren zum Photohärten von photopolymerisierbaren Zusammensetzungen, Beschichtungen, Klebstoffen und Tinten, wobei das Verfahren die folgenden Schritte in der angegebenen Reihenfolge umfasst:
a) Auftragen oder Drucken der photopolymerisierbaren Zusammensetzung gemäß einem der Ansprüche 11 bis 13 auf ein Substrat und
b) Photopolymerisieren der aufgetragenen oder aufgedruckten Zusammensetzung mit einer Lichtquelle auf dem Substrat.

15. Verwendung des Photoinitiatorpakets gemäß einem der Ansprüche 1 bis 10 bei der Herstellung von Druckfarben, Siebdruckfarben, Tiefdruckfarben, Lötmasken, Ätz-Offsetdruckfarben, Flexodruckfarben, Tiefdruckfarben, Tintenstrahlfarben, Resistmaterialien, Isolatoren, Verkapselungsmaterialien, Bildaufzeichnungsmaterialien, Lötmasken, Passivierungsschichten, Schutzbeschichtungen, 3D-Druckobjekten und -formen, holografischen Anwendungen, Beschichtungen für optische Fasern, Wellenleitern und Linsen, Überdrucklacken, Holz-, Vinyl-, Metall- und Kunststoffbeschichtungen.

## Revendications

1. Ensemble photoinitiateur comprenant, plus préférentiellement consistant en :
a) un ou plusieurs photoinitiateurs oxyde de bisacylphosphine, chacun ayant une structure selon la formule (I): 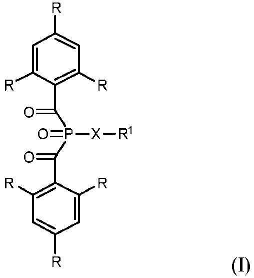
dans lequel chaque instance de R est indépendamment sélectionnée parmi le groupe consistant en C₁-C₄ alkyle ;
dans lequel X est sélectionné parmi le groupe consistant en une liaison simple directe, O, S, NR³, - CH₂CO₂-, et -CH₂CH₂CO₂- ;
dans lequel R¹ est sélectionné parmi le groupe consistant en C₁-C₄₀ alkyle et C₂-C₄₀ alkyle interrompu qui est interrompu par un ou plusieurs O ou C₃-C₈ cycloalkylènes, dans lequel ledit C₁-C₄₀ alkyle ou C₂-C₄₀ alkyle interrompu peut être non substitué ou substitué par un ou plusieurs groupes sélectionnés parmi OH et R² ;
dans lequel R² est 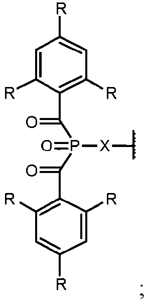
dans lequel R³ est sélectionné parmi le groupe consistant en hydrogène, (CO)R⁴, phényle, C₁-C₁₂ alkyle, C₂-C₁₂ alkyle étant interrompu par un ou plusieurs O, dans lequel ledit C₁-C₁₂ alkyle ou C₂-C₁₂ alkyle interrompu est non substitué ou substitué par un ou plusieurs C₃-C₇ cycloalkyles, OH ou par NCO, C₃-C₁₂ cycloalkyle qui est non substitué ou substitué par un ou plusieurs C₁-C₄ alkyles, C₁-C₄ alcoxys, OH ou par NCO ; et dans lequel R⁴ est sélectionné parmi le groupe consistant en C₁-C₁₂ alkyle ou C₂-C₁₂ alkyle qui est interrompu par un ou plusieurs O, dans lequel ledit C₁-C₁₂ alkyle ou C₂-C₁₂ alkyle interrompu est non substitué ou substitué par un ou plusieurs C₃-C₇ cycloalkyles, OH, NCO ou par phényle qui est substitué par NCO ; C₃-C₁₂ cycloalkyle ; C₂-C₁₀ alcényle qui est non substitué ou substitué par un ou plusieurs C₁-C₄ alkyles, OH ou C₁-C₄ alcoxys ; C₆-C₁₄ aryle qui est non substitué ou substitué par C₁-C₁₂ alkyle, C₁-C₁₂ alcoxy, NCO ou par C₁-C₁₂ alkyle substitué par NCO.
b) un ou plusieurs autres photoinitiateurs oxyde d'acylphosphine ayant une structure non conforme à la formule (I) ;
c) un ou plusieurs sensibilisateurs azurants optiques ; et
d) optionnellement une ou plusieurs amines,
dans lequel l'ensemble photoinitiateur est un mélange qui est liquide à 25 °C et à pression standard.

2. Ensemble photoinitiateur selon la revendication 1, dans lequel chaque instance de R est Me.

3. Ensemble photoinitiateur selon soit la revendication 1 soit la revendication 2, dans lequel X est sélectionné parmi le groupe consistant en une liaison simple directe, O, -CH₂CO₂-, et -CH₂CH₂CO₂-, plus préférentiellement est sélectionné parmi le groupe consistant en une liaison simple directe -CH₂CO₂-, et - CH₂CH₂CO₂-, le plus préférentiellement est une liaison simple directe.

4. Ensemble photoinitiateur selon l'une des revendications précédentes, dans lequel R¹ est sélectionné parmi le groupe consistant en C₁-C₂₀ alkyle, -(CH₂CH₂O-)ₙCH₃, et -(CH₂CH₂O-)ₙ H, dans lequel n est un entier dans la plage de 1 à 20, plus préférentiellement R¹ est C₁-C₂₀ alkyle.

5. Ensemble photoinitiateur selon l'une des revendications 1 à 4, dans lequel R¹ a une structure selon la formule (II) : 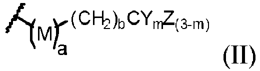
dans lequel chaque instance de M est indépendamment sélectionnée parmi (CH₂CH₂O) et (CH₂CH(CH₃)O) ;
dans lequel chaque instance de Y est indépendamment sélectionnée parmi hydrogène et alkyle C₁-C₄ ;
dans lequel chaque instance de Z est de structure CH₂ (M¹) _{C}R² ;
dans lequel chaque instance de M¹ est indépendamment sélectionnée parmi (OCH₂CH₂) et (OCH(CH₃)CH₂)
dans lequel a est un entier dans la plage de 0 à 15 ;
dans lequel b est un entier dans la plage de 0 à 6 ;
dans lequel chaque instance de c est indépendamment un entier dans la plage de 0 à 15 ;
dans lequel m est un entier dans la plage de 0 à 2 ; et
dans lequel chaque instance de X est indépendamment sélectionnée parmi le groupe consistant en -CH₂CO₂- et - CH₂CH₂CO₂-.

6. Ensemble photoinitiateur selon l'une des revendications précédentes, dans lequel au moins l'un des un ou plusieurs sensibilisateurs azurants optiques a une structure selon la formule (III) : 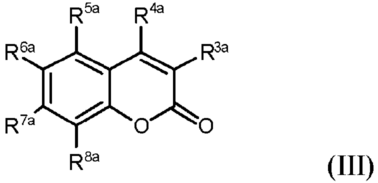
dans lequel R^{3a} est sélectionné parmi le groupe consistant en hydrogène, C₁-C₁₀ alkyle, C₆-C₁₄ aryle et C₆-C₁₄ hétéroaryle,
R^{4a} est sélectionné parmi le groupe consistant en hydrogène, C₁-C₁₀ alkyle, dans lequel ledit C₁-C₁₀ alkyle peut être substitué par un ou plusieurs atomes de fluor, et OR^{1a}, et
chacun de R^{5a} à R^{8a} est indépendamment sélectionné parmi le groupe consistant en hydrogène, halogène, C₁-C₁₀ alkyle, OR^{1a} et NR^{2a}₂ ;
dans lequel chaque instance de R^{1a} est indépendamment sélectionnée parmi hydrogène, C₁-C₁₀ alkyle et C₆-C₁₄ aryle, et chaque instance de R^{2a} est indépendamment sélectionnée parmi hydrogène, C₁-C₁₀ alkyle et C₆-C₁₄ aryle, dans lequel chaque instance de R^{1a} à R^{8a} peut optionnellement être jointe à une ou plusieurs autres instances de R^{1a} à R^{8a} pour former un ou plusieurs cycles à 5 chaînons ou 6 chaînons.

7. Ensemble photoinitiateur selon l'une des revendications précédentes, dans lequel au moins l'un des un ou plusieurs sensibilisateurs azurants optiques a une structure selon la formule (IV) : 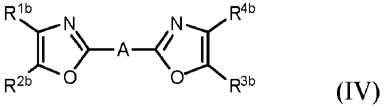
dans lequel chacun de R^{1b} à R^{4b} est indépendamment sélectionné parmi le groupe consistant en hydrogène, C₁-C₁₀ alkyle et C₆-C₁₄ aryle, dans lequel R^{1b} et R^{2b} peuvent être joints pour former un cycle saturé ou insaturé à 6 chaînons, qui peut être substitué par un ou plusieurs substituants sélectionnés parmi le groupe consistant en hydrogène, C₁-C₁₀ alkyle et C₆-C₁₄ aryle, et dans lequel R^{3b} et R^{4b} peuvent être joints pour former un cycle à 6 chaînons, qui peut être substitué par un ou plusieurs substituants sélectionnés parmi le groupe consistant en hydrogène, C₁-C₁₀ alkyle et C₆-C₁₄ aryle ; et
dans lequel A représente un groupe de connexion représenté par l'une des formules (V) à (IX) suivantes : 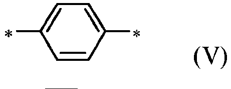 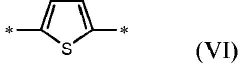 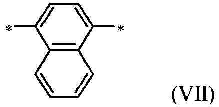 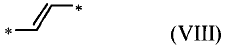 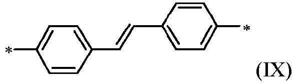
dans lequel chaque * représente une position de liaison de A dans chaque formule.

8. Ensemble photoinitiateur selon la revendication 7, dans lequel au moins l'un des un ou plusieurs sensibilisateurs azurants optiques a une structure selon la formule (X) : 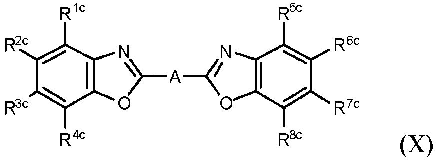 dans lequel chacun de R^{1c} à R^{8c} est indépendamment sélectionné parmi le groupe consistant en hydrogène, C₁-C₁₀ alkyle et C₆-C₁₄ aryle.

9. Ensemble photoinitiateur selon l'une des revendications précédentes, dans lequel les un ou plusieurs autres photoinitiateurs oxyde d'acylphosphine ayant une structure non conforme à la formule (I) comprend un ou plusieurs photoinitiateurs monoacylphosphine et un ou plusieurs photoinitiateurs oxyde de bisacylphosphine ayant une structure non conforme à la formule (I).

10. Ensemble photoinitiateur selon l'une des revendications précédentes, dans lequel l'ensemble photoinitiateur comprend, plus préférentiellement consiste en :
a) une quantité dans la plage de 15 à 40 % en poids, plus préférentiellement dans la plage de 18 à 35 % en poids, le plus préférentiellement dans la plage de 19 à 30 % en poids, par rapport au poids total de l'ensemble photoinitiateur, des un ou plusieurs photoinitiateurs oxyde de bisacylphosphine ayant une structure selon la formule (I) ;
b) une quantité dans la plage de 30 à 75 % en poids, plus préférentiellement dans la plage de 40 à 70 % en poids, le plus préférentiellement dans la plage de 50 à 60 % en poids, par rapport au poids total de l'ensemble photoinitiateur, des un ou plusieurs autres photoinitiateurs oxyde d'acylphosphine ayant une structure non conforme à la formule (I) ;
c) une quantité dans la plage de 5 à 30 % en poids, plus préférentiellement dans la plage de 10 à 25 % en poids, le plus préférentiellement dans la plage de 15 à 22 % en poids, par rapport au poids total de l'ensemble photoinitiateur, des un ou plusieurs sensibilisateurs azurants optiques ; et
d) optionnellement, une quantité dans la plage de 1 à 30 % en poids, plus préférentiellement dans la plage de 3 à 25 % en poids, le plus préférentiellement dans la plage de 5 à 20 % en poids, par rapport au poids total de l'ensemble photoinitiateur, d'une ou de plusieurs amines.

11. Composition photopolymérisable, comprenant :
a) un ou plusieurs composés polymérisables par radicaux libres éthyléniquement insaturés ;
b) l'ensemble photoinitiateur selon l'une des revendications 1 à 10.

12. Composition photopolymérisable selon la revendication 11, dans laquelle la composition photopolymérisable comprend :
a) une quantité dans la plage de 30 à 99,0 % en poids, plus préférentiellement dans la plage de 50 à 95,0 % en poids, le plus préférentiellement dans la plage de 70 à 90 % en poids, par rapport au poids total de la composition photopolymérisable, des un ou plusieurs composés polymérisables par radicaux libres éthyléniquement insaturés ;
b) une quantité dans la plage de 0,5 à 50 % en poids, plus préférentiellement dans la plage de 0,8 à 40 % en poids, le plus préférentiellement dans la plage de 1,0 à 30 % en poids, par rapport au poids total de la composition photopolymérisable, de l'ensemble photoinitiateur selon l'une des revendications 1 à 10.

13. Composition photopolymérisable selon la revendication 11 ou la revendication 12, dans laquelle la composition photopolymérisable comprend en outre un ou plusieurs, parmi les composants suivants :
c) une quantité dans la plage de 0,5 à 30 % en poids, plus préférentiellement dans la plage de 0,8 à 20 % en poids, le plus préférentiellement dans la plage de 1,0 à 15 % en poids d'un ou de plusieurs autres photoinitiateurs, d'un ou de plusieurs photosensibilisateurs et/ou d'un ou de plusieurs coinitiateurs ;
d) une quantité dans la plage de 0,1 à 30 % en poids, plus préférentiellement dans la plage de 1,0 à 25 % en poids, le plus préférentiellement dans la plage de 10 à 20 % en poids, par rapport au poids total de la composition photopolymérisable, d'un ou de plusieurs pigments ;
e) une quantité dans la plage de 5,0 à 60 % en poids, plus préférentiellement dans la plage de 8,0 à 50 % en poids, le plus préférentiellement dans la plage de 10 à 40 % en poids, par rapport au poids total de la composition photopolymérisable, d'un ou de plusieurs liants ; et
f) une quantité dans la plage de 0,01 à 10 % en poids, plus préférentiellement dans la plage de 0,01 à 8,0 % en poids, le plus préférentiellement dans la plage de 0,01 à 5,0 % en poids, par rapport au poids total de la composition photopolymérisable, d'un ou de plusieurs additifs.

14. Procédé de photodurcissement de compositions photopolymérisables, de revêtements, d'adhésifs et d'encres, ledit procédé comprenant les étapes suivantes dans l'ordre donné :
a) revêtir ou imprimer la composition photopolymérisable selon l'une des revendications 11 à 13 sur un substrat, et
b) photopolymériser ladite composition revêtue ou imprimée avec une source de lumière sur ledit substrat.

15. Utilisation de l'ensemble photoinitiateur selon l'une des revendications 1 à 10 dans la production de : encres d'impression, encres de sérigraphie, encres d'héliogravure, masques de soudure, encres d'impression offset par gravure, encres d'impression flexographique, encres d'héliogravure, encres à jet d'encre, matériau de réserve, isolants, encapsulants, matériau d'enregistrement d'image, masque de brasage, couche de passivation, revêtement de protection, objets et moules d'impression 3D, applications holographiques, revêtement de fibre optique, guide d'ondes et lentille, vernis de surimpression, revêtements pour bois, vinyle, métal et plastique.
